# EUROPEAN PATENT SPECIFICATION

(11) **EP 3 800 808 B1**
(45) Date of publication and mention of the grant of the patent: **15.03.2023**
(21) Application number: 20202704.1
(22) Date of filing: 20.09.2018
(51) Int. Cl.: H04B 7/185

(54) **SECURED INDEPENDENT HOSTED PAYLOAD OPERATIONS**
GESICHERTER UNABHÄNGIGER GEHOSTETER NUTZLASTBETRIEB
OPÉRATIONS DE CHARGE UTILE HÉBERGÉES INDÉPENDANTES ET SÉCURISÉES

(30) Priority: 03.10.2017 US 201715724091
(43) Date of publication of application: 07.04.2021
(62) Divisional of application: 18195744.0
(73) Proprietor: The Boeing Company, Chicago, IL 60606-2016 (US)
(72) Inventor: CHEN, Yi-Feng James, Chicago, IL 60606 (US); WINIG, Robert J., Chicago, IL 60606 (US)
(74) Representative: Plasseraud IP

(56) References cited:
- EP-A2- 2 573 956
- PANG R ET AL: "CHIRP program lessons learned from the contractor program management team perspective", AEROSPACE CONFERENCE, 2012 IEEE, IEEE, 3 March 2012 (2012-03-03), pages 1-7, XP032230091, DOI: 10.1109/AERO.2012.6187278 ISBN: 978-1-4577-0556-4

## Description

### BACKGROUND

The present disclosure relates to payload operations. In particular, it relates to secured independent hosted payload operations.

Currently, typical payload operations for a vehicle (e.g., a satellite) have the ability to perform switching of inputs to outputs of the payload on the vehicle. All of this switching on the payload is commanded and controlled by a single satellite controller with no resource allocation privacy.

As such, there is a need for an improved payload operations design that allows for privacy in the allocation of resources on the payload. Document: PANG R ET AL, "CHIRP program lessons learned from the contractor program management team perspective", AEROSPACE CONFERENCE, 2012 IEEE, IEEE, (20120303), doi:10.1109/AER0.2012.6187278, ISBN 978-1-4577-0556-4, in accordance with its abstract states with shrinking budgets and expanding program costs, government program offices are seeking innovative ways to accomplish their goals with better efficiency and less cost. In 2008, the U.S. Air Force's Space and Missile Systems Center's Development Planning Directorate (SMC/XRF) took a step in this direction and funded a new program that started as an unsolicited proposal from SES Government Solutions, and its industry teammates, Orbital Sciences Corporation (Orbital) and Science Applications International Corporation (SAIC). The program called for hosting of an Air Force furnished infrared sensor, developed by SAIC, on an SES commercial communications satellite, built by Orbital, and was appropriately referred to as CHIRP (Commercially Hosted Infra-Red Payload). This new effort has has stimulated a whole new market area for hosted payloads that is now germinating throughout the aerospace industry. EP2573956, according to its abstract states a satellite control system comprising a communications system and an information management system. The communications system is configured to receive commands from a plurality of operators. The communications system is further configured to send the commands to a satellite using a number of communications links. The information management system may be configured to avoid conflicts between the commands sent by the communications system to the satellite from different operators in the plurality of operators that cause an undesired operation of the satellite. The information management system may be configured to provide a desired level of security for information sent between the plurality of operators and the satellite.

### SUMMARY

The present disclosure relates to a method and system for secured independent hosted payload operations. In one aspect, there is provided a system according to claim 1. In a second aspect, there is provided a method according to claim 14.

In one or more embodiments, the hosted processor comprises the hosted communication security module as a single unit. In some embodiments, the hosted communication security module and the hosted processor are two separate units.

In at least one embodiment, the hosted processor comprises at least one processor. In some embodiments, the host payload comprises at least one processor.

In at least one embodiment, the hosted communication security module comprises more than one communication security module. In some embodiments, at least one of the communication security modules is a redundant communication security module.

In one or more embodiments, the host payload antenna and the hosted payload antenna each comprise at least one radio frequency (RF) antenna. In at least one embodiment, the RF antenna is a reflector antenna. In some embodiments, the RF antenna is a multi-feed array antenna.

In at least one embodiment, the reconfiguring of the host payload and/or the hosted payload comprises adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering.

In one or more embodiments, the reconfiguring of the host payload comprises reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix.

In at least one embodiment, the reconfiguring of the hosted payload comprises reconfiguring at least one of: the hosted payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix.

In one or more embodiments, the vehicle is an airborne vehicle. In at least one embodiment, the airborne vehicle is a satellite, an aircraft, an unmanned aerial vehicle (UAV), or a space plane.

The features, functions, and advantages can be achieved independently in various embodiments of the present disclosure or may be combined in yet other embodiments.

### DRAWINGS

These and other features, aspects, and advantages of the present disclosure will become better understood with regard to the following description, appended claims, and accompanying drawings where:
FIG. 1 is a diagram showing the disclosed system for secured independent hosted payload operations, where the host commanding and host telemetry are both transmitted out-of-band, in accordance with at least one embodiment of the present disclosure.
FIGS. 2A, 2B, 2C, 2D, 2E, and 2F together show a flow chart for the disclosed method for secured independent hosted payload operations, where the host commanding and host telemetry are both transmitted out-of-band, in accordance with at least one embodiment of the present disclosure.
FIG. 3 is a diagram showing the disclosed system for secured independent hosted payload operations, where the host commanding is transmitted out-of-band and the host telemetry is transmitted inband, in accordance with at least one embodiment of the present disclosure.
FIGS. 4A, 4B, 4C, 4D, 4E, and 4F together show a flow chart for the disclosed method for secured independent hosted payload operations, where the host commanding is transmitted out-of-band and the host telemetry is transmitted inband, in accordance with at least one embodiment of the present disclosure.
FIG. 5 is a diagram showing the disclosed system for secured independent hosted payload operations, where the host commanding is transmitted inband and the host telemetry is transmitted out-of-band, in accordance with at least one embodiment of the present disclosure.
FIGS. 6A, 6B, 6C, 6D, 6E, and 6F together show a flow chart for the disclosed method for secured independent hosted payload operations, where the host commanding is transmitted inband and the host telemetry is transmitted out-of-band, in accordance with at least one embodiment of the present disclosure.
FIG. 7 is a diagram showing the disclosed system for secured independent hosted payload operations, where the host commanding and host telemetry are both transmitted inband, in accordance with at least one embodiment of the present disclosure.
FIGS. 8A, 8B, 8C, 8D, 8E, and 8F together show a flow chart for the disclosed method for secured independent hosted payload operations, where the host commanding and host telemetry are both transmitted inband, in accordance with at least one embodiment of the present disclosure.

### DESCRIPTION

The methods and apparatus disclosed herein provide an operative system for secured independent hosted payload operations. The system of the present disclosure allows for vehicle operators to privately share vehicle resources.

As previously mentioned above, currently, typical payload operations for a vehicle (e.g., a satellite) have the ability to perform switching of inputs to outputs of the payload on the vehicle. All of this switching on the payload is commanded and controlled by a single satellite controller with no resource allocation privacy.

The disclosed system allows for private vehicle resource allocation and control that provides vehicle users the ability to privately, dynamically, allocate resources (e.g., a host payload and/or a hosted payload) on demand.

It should be noted that the host payload and/or the hosted payload for the disclosed system for private vehicle resource allocation and control may employ various different types of transponders. For example, various different types of transponders may be employed including, but not limited to, various different types of digital transponders, various different types of analog transponders (e.g., conventional repeater-type transponders), and various different types of combination analog/digital transponders.

It should be noted that in this disclosure, inband frequency band(s) refer to a frequency band(s) that is the same frequency band(s) utilized to transmit payload data (e.g., host payload data and/or hosted payload data); and out-of-band frequency band(s) refer to a frequency band(s) that is not the same frequency band(s) utilized to transmit payload data (e.g., host payload data).

In the following description, numerous details are set forth in order to provide a more thorough description of the system. It will be apparent, however, to one skilled in the art, that the disclosed system may be practiced without these specific details. In the other instances, well known features have not been described in detail so as not to unnecessarily obscure the system.

Embodiments of the present disclosure may be described herein in terms of functional and/or logical components and various processing steps. It should be appreciated that such components may be realized by any number of hardware, software, and/or firmware components configured to perform the specified functions. For example, an embodiment of the present disclosure may employ various integrated circuit components (e.g., memory elements, digital signal processing elements, logic elements, look-up tables, or the like), which may carry out a variety of functions under the control of one or more processors, microprocessors, or other control devices. In addition, those skilled in the art will appreciate that embodiments of the present disclosure may be practiced in conjunction with other components, and that the system described herein is merely one example embodiment of the present disclosure.

For the sake of brevity, conventional techniques and components related to satellite communication systems, and other functional aspects of the system (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

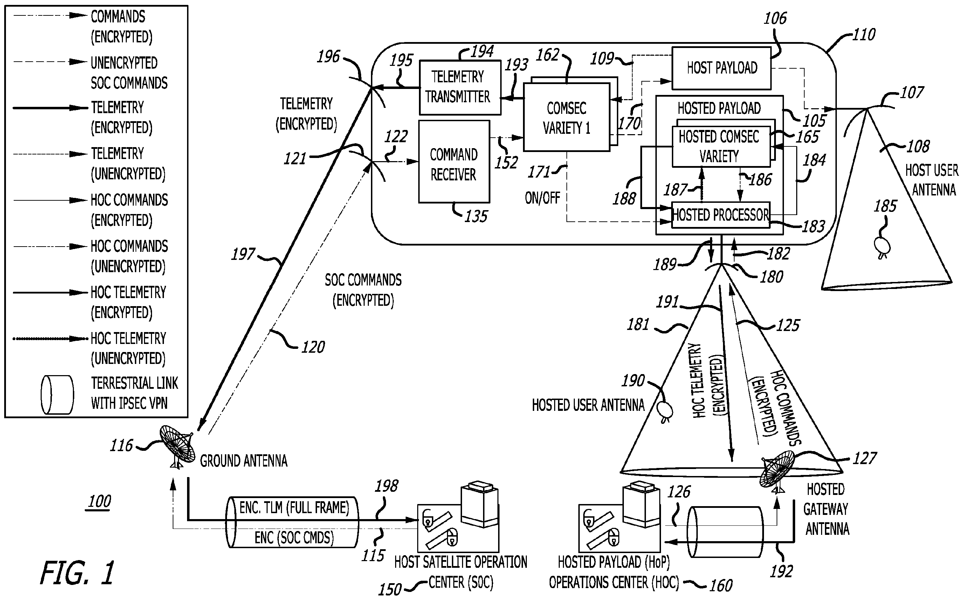

FIG. 1 is a diagram 100 showing the disclosed system for secured independent hosted payload operations, where the host commanding and host telemetry are both transmitted out-of-band, in accordance with at least one embodiment of the present disclosure. In this figure, a vehicle 110, a host satellite operations center (SOC) 150, and a hosted payload (HoP) operation center (HOC) 160 are shown. Various different types of vehicles may be employed for the vehicle 110 including, but not limited to, an airborne vehicle. And, various different types of airborne vehicles may be employed for the vehicle including, but not limited to, a satellite, an aircraft, an unmanned aerial vehicle (UAV), and a space plane.

In the case of a satellite being employed for the vehicle 110, it should be noted that satellites typically include computer-controlled systems. A satellite generally includes a bus and a payload (e.g., a host payload 106 and/or a hosted payload(s) 105). The bus may include systems (which include components) that control the satellite. These systems perform tasks, such as power generation and control, thermal control, telemetry, attitude control, orbit control, and other suitable operations.

The payload of the satellite provides functions to users of the satellite. The payload may include antennas, transponders, and other suitable devices. For example, with respect to communications, the payload in a satellite may be used to provide Internet access, telephone communications, radio, television, and/or other types of communications. It should be noted that, in one or more embodiments, the satellite (i.e. the vehicle 110) comprises multiple separate payloads, which are a host payload 106 and a hosted payload(s) 105. Different entities may use the different payloads on the satellite. For example, a host user (e.g., an owner of the satellite) may utilize the host payload 106, and the host user may lease out the hosted payload 105 to a hosted user (e.g., a customer) that utilizes the hosted payload 105.

Leasing a payload(s) (e.g., a hosted payload(s)) to a customer(s) may increase the revenues that a user (e.g., the host user) of a satellite can obtain. Further, a customer may use a subset of the total resources in a satellite for a cost that is less than the cost for the customer to purchase and operate a satellite, to build and operate a satellite, or to lease an entire satellite.

During operation, the host SOC 150 encrypts unencrypted host commands (i.e. Unencrypted SOC Commands), by utilizing a host communication security (COMSEC) variety, to produce encrypted host commands (i.e. encrypted SOC Commands). The host commands are commands that are used to configure the host payload 106 that is utilized by the host SOC 150. It should be noted that the host COMSEC variety may include at least one encryption key and/or at least one algorithm (e.g., a Type 1 encryption algorithm or a Type 2 encryption algorithm).

The host SOC 150 then transmits 115 the encrypted host commands to a host ground antenna 116. Then, the host ground antenna 116 transmits 120 the encrypted host commands to a command antenna 121 on the vehicle 110. The host ground antenna 116 transmits 120 the encrypted host commands utilizing an out-of-band frequency band(s) (i.e. a frequency band(s) that is not the same frequency band(s) utilized to transmit payload data). The command antenna 121 on the vehicle 110 then transmits 122 the encrypted host commands to a command receiver 135.

The command receiver 135 then transmits 152 the encrypted host commands to a host communication security module 162. The host communication security module 162 decrypts the encrypted host commands utilizing the host COMSEC variety to generate unencrypted host commands.

It should be noted that the host communication security module 162 may comprise one or more communication security modules (e.g., communication security module 1 and communication security module 2, where communication security module 2 is a redundant communication security module that is utilized when there is a failure of communication security module 1), where the extra communication security modules are redundant communication security modules that are utilized when there is a communication security module failure. In addition, the host communication security module 162 may comprise one or more processors.

The host communication security module 162 then transmits 170 the unencrypted host commands to the host payload 106. The host payload 106 is reconfigured according to the unencrypted host commands. The reconfiguring of the host payload 106 may comprise adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering. Additionally, the reconfiguring of the host payload 106 may comprise reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix. In one or more embodiments, the host payload comprises 106 one or more processors.

After the host payload 106 is reconfigured, a host payload antenna 107 then transmits (e.g., in one or more antenna beams 108) host user data to a host user antenna 185 on the ground. It should be noted that in other embodiments, the host user antenna 185 may be airborne (e.g., located on an aircraft or satellite) or marine (e.g., located on a ship) rather than terrestrial (e.g., located on the ground) as is shown in FIG. 1. The host communication security module 162 then transmits 171 the unencrypted host commands to the hosted payload 105 to command the hosted payload 105 on or off according to the unencrypted host commands.

Also, it should be noted that, although in FIG. 1, antenna beam 108 is shown to include a single circular spot beam; in other embodiments, the antenna beam 108 may include more than one beam as is shown in FIG. 1 (e.g., antenna beam 108 may include multiple beams, and antenna beam 108 may include beams of different shapes than the circular spot beam as is shown in FIG. 1 (e.g., antenna beam 108 may include elliptical beams and/or shaped beams of various different shapes).

It should be noted that in one or more embodiments, the host payload antenna 107 may comprise one or more reflector dishes including, but not limited to, parabolic reflectors and/or shaped reflectors. In some embodiments, the host payload antenna 107 may comprise one or more multifeed antenna arrays.

The host payload 106 transmits 109 unencrypted host telemetry (i.e. unencrypted SOC Telemetry, which is telemetry data related to the host payload 106 that is utilized by the host SOC 150) to the host communication security module 162. The host communication security module 162 then encrypts the unencrypted host telemetry utilizing the host COMSEC variety to generate encrypted host telemetry (i.e. encrypted SOC Telemetry).

The host communication security module 162 then transmits 193 the encrypted host telemetry to a telemetry transmitter 194. The telemetry transmitter 194 then transmits 195 the encrypted host telemetry to a telemetry antenna 196. The telemetry antenna 196 then transmits 197 the encrypted host telemetry to the host ground antenna 116. The telemetry antenna 196 transmits 197 the encrypted host telemetry utilizing an out-of-band frequency band(s). The host ground antenna 116 transmits 198 the encrypted host telemetry to the host SOC 150. The host SOC 150 then decrypts the encrypted host telemetry utilizing the host COMSEC variety to generate the unencrypted host telemetry.

The HOC 160 encrypts unencrypted hosted commands (i.e. Unencrypted HOC Commands), by utilizing a hosted communication security (COMSEC) variety, to produce encrypted hosted commands (i.e. encrypted HOC Commands). The hosted commands are commands that are used to configure the hosted payload 105 that is utilized by the HOC 160. It should be noted that the hosted COMSEC variety may include at least one encryption key and/or at least one algorithm (e.g., a Type 1 encryption algorithm or a Type 2 encryption algorithm).

The HOC 160 then transmits 126 the encrypted hosted commands to a hosted gateway antenna 127. Then, the hosted gateway antenna 127 transmits 125 the encrypted hosted commands to a hosted payload antenna 180 on the vehicle 110. The hosted gateway antenna 127 transmits 125 the encrypted hosted commands utilizing an inband frequency band(s) (i.e. a frequency band(s) that is the same frequency band(s) utilized to transmit payload data). The hosted payload antenna 180 on the vehicle 110 then transmits 182 the encrypted hosted commands to a processor 183 on the hosted payload 105. In one or more embodiments, the hosted processor 183 comprises one or more processors. The hosted processor 183 transmits 184 the encrypted hosted commands to a hosted communication security module 165. The hosted communication security module 165 decrypts the encrypted hosted commands utilizing the hosted COMSEC variety to generate unencrypted hosted commands.

It should be noted that the hosted communication security module 165 may comprise one or more communication security modules (e.g., communication security module 3 and communication security module 4, where communication security module 4 is a redundant communication security module that is utilized when there is a failure of communication security module 3), where the extra communication security modules are redundant communication security modules that are utilized when there is a communication security module failure. In addition, the hosted communication security module 165 may comprise one or more processors. In some embodiments, the hosted communication security module 165 and the hosted processor 183 are separate units, as is shown in FIG. 1. In other embodiments, the hosted communication security module 165 and the hosted processor 183 are a single unit.

The hosted communication security module 165 then transmits 186 the unencrypted hosted commands to the hosted processor 183. The hosted payload 105 is reconfigured by the hosted processor 183 according to the unencrypted hosted commands. The reconfiguring of the hosted payload 105 may comprise adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering. Additionally, the reconfiguring of the hosted payload 105 may comprise reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix. After the hosted payload 105 is reconfigured, a hosted payload antenna 180 then transmits (e.g., in one or more antenna beams 181) hosted user data to a hosted user antenna 190 on the ground. It should be noted that in other embodiments, the hosted user antenna 190 may be airborne (e.g., located on an aircraft or satellite) or marine (e.g., located on a ship) rather than terrestrial (e.g., located on the ground) as is shown in FIG. 1.

Also, it should be noted that, although in FIG. 1, antenna beam 181 is shown to include a single circular spot beam; in other embodiments, the antenna beam 181 may include more than one beam as is shown in FIG. 1 (e.g., antenna beam 181 may include multiple beams, and antenna beam 181 may include beams of different shapes than the circular spot beam as is shown in FIG. 1 (e.g., antenna beam 181 may include elliptical beams and/or shaped beams of various different shapes).

It should be noted that in one or more embodiments, the hosted payload antenna 180 may comprise one or more reflector dishes including, but not limited to, parabolic reflectors and/or shaped reflectors. In some embodiments, the host payload antenna 180 may comprise one or more multifeed antenna arrays.

The hosted processor 183 transmits 187 unencrypted hosted telemetry (i.e. unencrypted HOC Telemetry, which is telemetry data related to the hosted payload 105 that is utilized by the HOC 160) to the hosted communication security module 165. The hosted communication security module 165 then encrypts the unencrypted hosted telemetry utilizing the hosted COMSEC variety to generate encrypted hosted telemetry (i.e. encrypted HOC Telemetry).

The hosted communication security module 165 then transmits 188 the encrypted hosted telemetry to the hosted processor 183. The hosted processor 183 then transmits 189 the encrypted hosted telemetry to the hosted payload antenna 180. The hosted payload antenna 180 then transmits 191 the encrypted hosted telemetry to the hosted gateway antenna 127. The hosted payload antenna 180 transmits 191 the encrypted hosted telemetry utilizing an inband frequency band(s). The hosted gateway antenna 127 transmits 192 the encrypted hosted telemetry to the HOC 160. The HOC 160 then decrypts the encrypted hosted telemetry utilizing the hosted COMSEC variety to generate the unencrypted hosted telemetry.

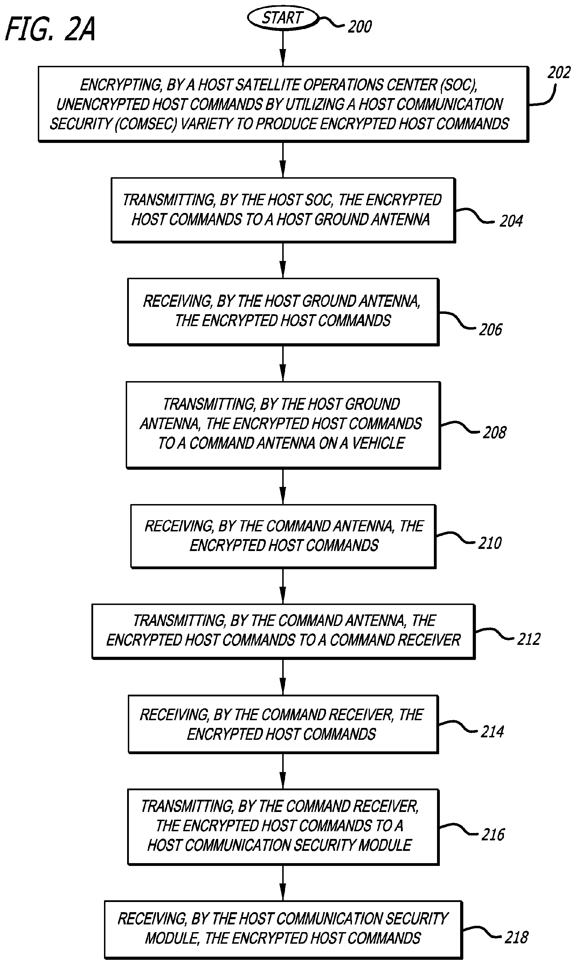

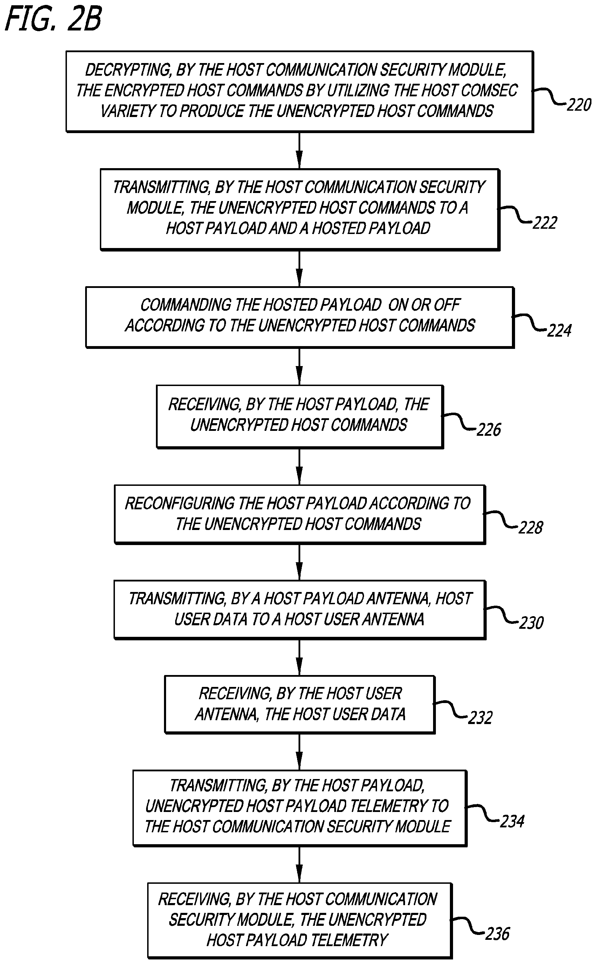

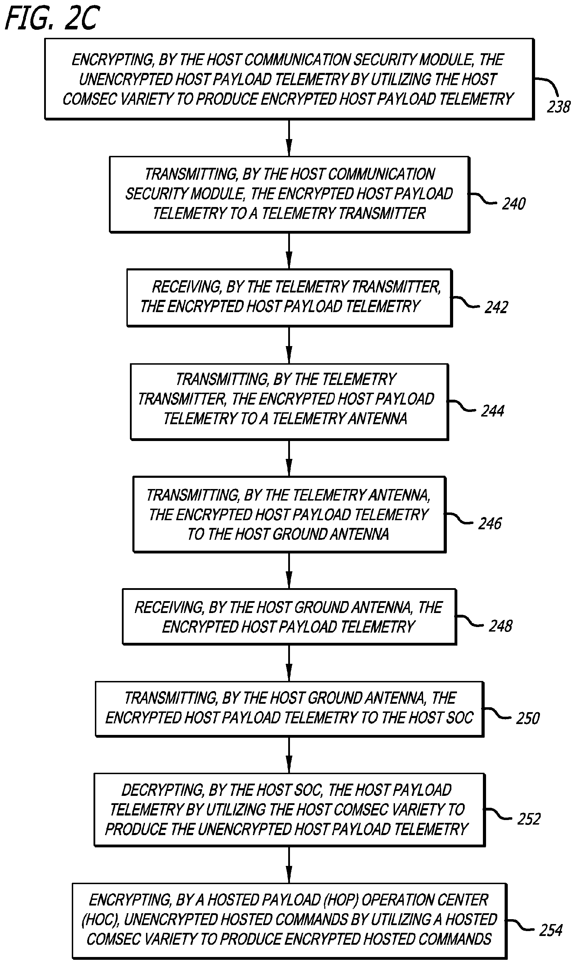

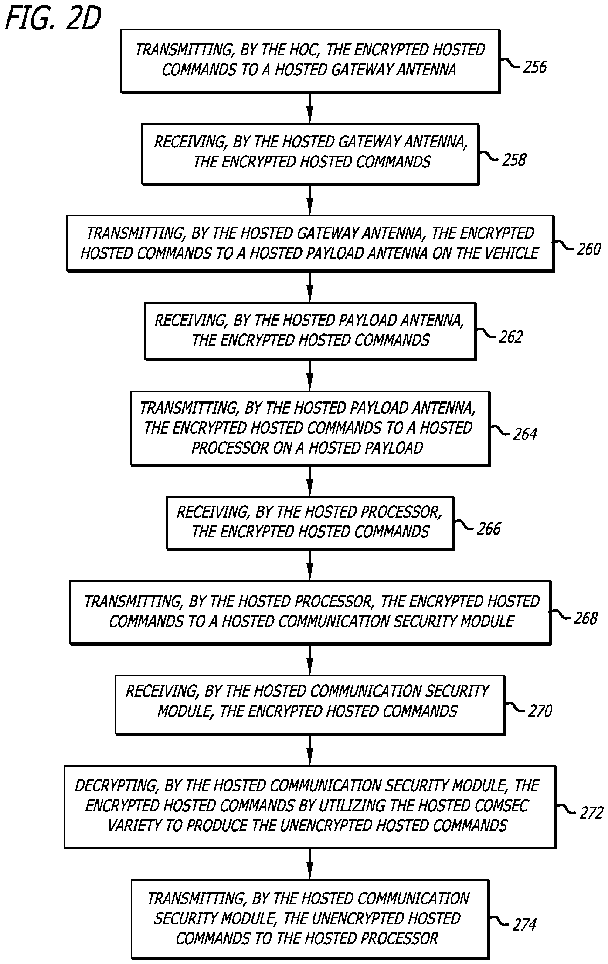

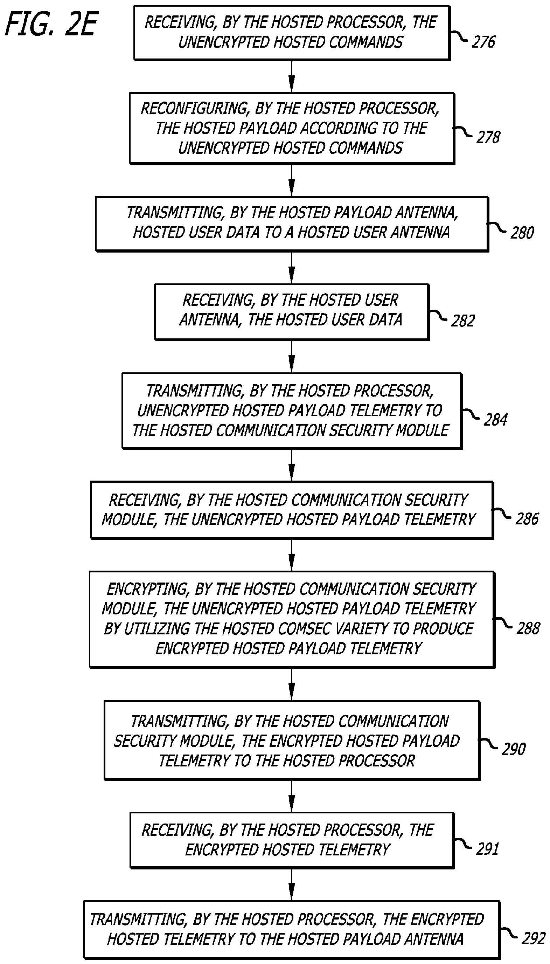

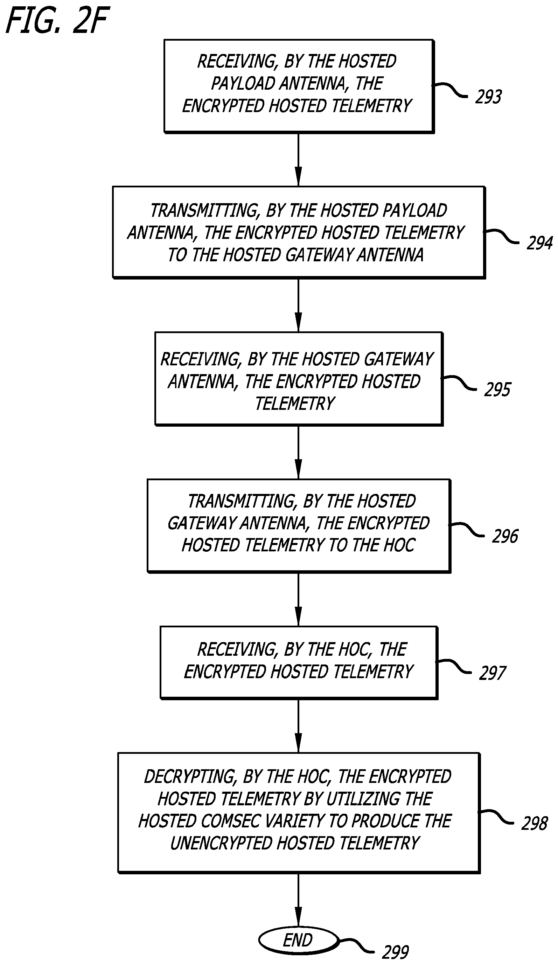

FIGS. 2A, 2B, 2C, 2D, 2E, and 2F together show a flow chart for the disclosed method for secured independent hosted payload operations, where the host commanding and host telemetry are both transmitted out-of-band, in accordance with at least one embodiment of the present disclosure. At the start 200 of the method, a host satellite operations center (SOC) encrypts unencrypted host commands by utilizing a host communication security (COMSEC) variety to produce encrypted host commands 202. Then, the host SOC transmits the encrypted host commands to a host ground antenna 204. The host ground antenna then receives the encrypted host commands 206. Then, the host ground antenna transmits the encrypted host commands to a command antenna on a vehicle 208. The command antenna then receives the encrypted host commands 210. Then, the command antenna transmits the encrypted host commands to a command receiver 212. The command receiver then receives the encrypted host commands 214. Then, the command receiver transmits the encrypted host commands to a host communication security module 216.

The host communication security module then receives the encrypted host commands 218. Then, the host communication security module decrypts the encrypted host commands by utilizing the host COMSEC variety to produce the unencrypted host commands 220. The host communication security module then transmits the unencrypted host commands to a host payload and a hosted payload 222. Then, the hosted payload is commanded on or off according to the unencrypted host commands 224. The host payload then receives the unencrypted host commands 226. Then, the host payload is reconfigured according to the unencrypted host commands 228. A host payload antenna then transmits host user data to a host user antenna 230. Then, the host user antenna receives the host user data 232. The host payload then transmits unencrypted host payload telemetry to the host communication security module 234.

Then, the host communication security module receives the unencrypted host payload telemetry 236. The host communication security module then encrypts the unencrypted host payload telemetry by utilizing the host COMSEC variety to produce encrypted host payload telemetry 238. Then, the host communication security module transmits the encrypted host payload telemetry to a telemetry transmitter 240. The telemetry transmitter then receives the encrypted host payload telemetry 242. Then, the telemetry transmitter transmits the encrypted host payload telemetry to a telemetry antenna 244. The telemetry antenna then transmits the encrypted host payload telemetry to the host ground antenna 246. Then, the host ground antenna receives the encrypted host payload telemetry 248. The host ground antenna then transmits the encrypted host payload telemetry to the host SOC 250. Then, the host SOC decrypts the host payload telemetry by utilizing the host COMSEC variety to produce the unencrypted host payload telemetry 252.

A hosted payload (HoP) operation center (HOC) encrypts unencrypted hosted commands by utilizing a hosted COMSEC variety to produce encrypted hosted commands 254. Then, the HOC transmits the encrypted hosted commands to a hosted gateway antenna 256. The hosted gateway antenna then receives the encrypted hosted commands 258. Then, the hosted gateway antenna transmits the encrypted hosted commands to a hosted payload antenna on the vehicle 260. The hosted payload antenna then receives the encrypted hosted commands 262. Then, the hosted payload antenna transmits the encrypted hosted commands to a hosted processor on a hosted payload 264. The hosted processor then receives the encrypted hosted commands 266. Then, the hosted processor transmits the encrypted hosted commands to a hosted communication security module 268.

The hosted communication security module then receives the encrypted hosted commands 270. Then, the hosted communication security module decrypts the encrypted hosted commands by utilizing the hosted COMSEC variety to produce the unencrypted hosted commands 272. The hosted communication security module then transmits the unencrypted hosted commands to the hosted processor 274. Then, the hosted processor receives the unencrypted hosted commands 276. The hosted processor then reconfigures the hosted payload according to the unencrypted hosted commands 278. Then, the hosted payload antenna transmits hosted user data to a hosted user antenna 280. The hosted user antenna then receives the hosted user data 282. Then, the hosted processor transmits unencrypted hosted payload telemetry to the hosted communication security module 284.

The hosted communication security module then receives the unencrypted hosted payload telemetry 286. Then, the hosted communication security module encrypts the unencrypted hosted payload telemetry by utilizing the hosted COMSEC variety to produce encrypted hosted payload telemetry 288. The hosted communication security module then transmits the encrypted hosted payload telemetry to the hosted processor 290. Then, the hosted processor receives the encrypted hosted telemetry 291. The hosted processor then transmits the encrypted hosted telemetry to the hosted payload antenna 292. Then, the hosted payload antenna receives the encrypted hosted telemetry 293. The hosted payload antenna then transmits the encrypted hosted telemetry to the hosted gateway antenna 294. Then, the hosted gateway antenna receives the encrypted hosted telemetry 295. The hosted gateway antenna then transmits the encrypted hosted telemetry to the HOC 296. Then, the HOC receives the encrypted hosted telemetry 297. The HOC then decrypts the encrypted hosted telemetry by utilizing the hosted COMSEC variety to produce the unencrypted hosted telemetry 298. Then, the method ends 299.

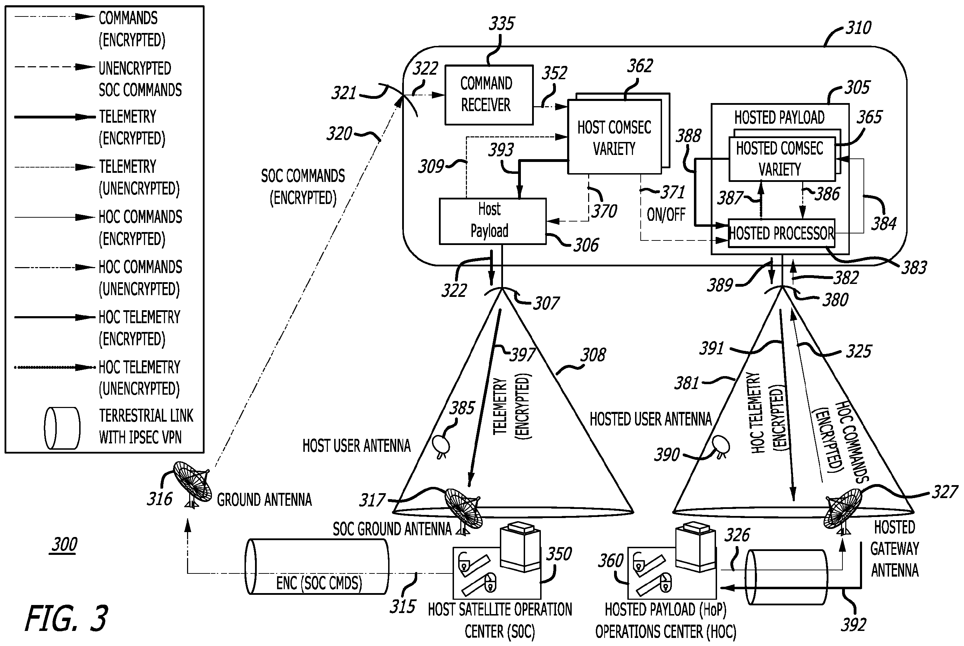

FIG. 3 is a diagram 300 showing the disclosed system for secured independent hosted payload operations, where the host commanding is transmitted out-of-band and the host telemetry is transmitted inband, in accordance with at least one embodiment of the present disclosure. In this figure, a vehicle 310, a host satellite operations center (SOC) 350, and a hosted payload (HoP) operation center (HOC) 360 are shown. Various different types of vehicles may be employed for the vehicle 310 including, but not limited to, an airborne vehicle. And, various different types of airborne vehicles may be employed for the vehicle including, but not limited to, a satellite, an aircraft, an unmanned aerial vehicle (UAV), and a space plane.

In the case of a satellite being employed for the vehicle 310, it should be noted that satellites typically include computer-controlled systems. A satellite generally includes a bus and a payload (e.g., a host payload 306 and/or a hosted payload(s) 305). The bus may include systems (which include components) that control the satellite. These systems perform tasks, such as power generation and control, thermal control, telemetry, attitude control, orbit control, and other suitable operations.

The payload of the satellite provides functions to users of the satellite. The payload may include antennas, transponders, and other suitable devices. For example, with respect to communications, the payload in a satellite may be used to provide Internet access, telephone communications, radio, television, and/or other types of communications. It should be noted that, in one or more embodiments, the satellite (i.e. the vehicle 310) comprises multiple separate payloads, which are a host payload 306 and a hosted payload(s) 305. Different entities may use the different payloads on the satellite. For example, a host user (e.g., an owner of the satellite) may utilize the host payload 306, and the host user may lease out the hosted payload 305 to a hosted user (e.g., a customer) that utilizes the hosted payload 305.

Leasing a payload(s) (e.g., a hosted payload(s)) to a customer(s) may increase the revenues that a user (e.g., the host user) of a satellite can obtain. Further, a customer may use a subset of the total resources in a satellite for a cost that is less than the cost for the customer to purchase and operate a satellite, to build and operate a satellite, or to lease an entire satellite.

During operation, the host SOC 350 encrypts unencrypted host commands (i.e. Unencrypted SOC Commands), by utilizing a host communication security (COMSEC) variety, to produce encrypted host commands (i.e. encrypted SOC Commands). The host commands are commands that are used to configure the host payload 306 that is utilized by the host SOC 350. It should be noted that the host COMSEC variety may include at least one encryption key and/or at least one algorithm (e.g., a Type 1 encryption algorithm or a Type 2 encryption algorithm).

The host SOC 350 then transmits 315 the encrypted host commands to a host ground antenna 316. Then, the host ground antenna 316 transmits 320 the encrypted host commands to a command antenna 321 on the vehicle 310. The host ground antenna 316 transmits 320 the encrypted host commands utilizing an out-of-band frequency band(s) (i.e. a frequency band(s) that is not the same frequency band(s) utilized to transmit payload data). The command antenna 321 on the vehicle 310 then transmits 322 the encrypted host commands to a command receiver 335.

The command receiver 335 then transmits 352 the encrypted host commands to a host communication security module 362. The host communication security module 362 decrypts the encrypted host commands utilizing the host COMSEC variety to generate unencrypted host commands.

It should be noted that the host communication security module 362 may comprise one or more communication security modules (e.g., communication security module 1 and communication security module 2, where communication security module 2 is a redundant communication security module that is utilized when there is a failure of communication security module 1), where the extra communication security modules are redundant communication security modules that are utilized when there is a communication security module failure. In addition, the host communication security module 362 may comprise one or more processors.

The host communication security module 362 then transmits 370 the unencrypted host commands to the host payload 306. The host payload 306 is reconfigured according to the unencrypted host commands. The reconfiguring of the host payload 306 may comprise adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering. Additionally, the reconfiguring of the host payload 306 may comprise reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix. In one or more embodiments, the host payload comprises 306 one or more processors.

After the host payload 306 is reconfigured, a host payload antenna 307 then transmits (e.g., in one or more antenna beams 308) host user data to a host user antenna 385 on the ground. It should be noted that in other embodiments, the host user antenna 385 may be airborne (e.g., located on an aircraft or satellite) or marine (e.g., located on a ship) rather than terrestrial (e.g., located on the ground) as is shown in FIG. 3. The host communication security module 362 then transmits 371 the unencrypted host commands to the hosted payload 305 to command the hosted payload 305 on or off according to the unencrypted host commands.

Also, it should be noted that, although in FIG. 3, antenna beam 308 is shown to include a single circular spot beam; in other embodiments, the antenna beam 308 may include more than one beam as is shown in FIG. 3 (e.g., antenna beam 308 may include multiple beams, and antenna beam 308 may include beams of different shapes than the circular spot beam as is shown in FIG. 3 (e.g., antenna beam 308 may include elliptical beams and/or shaped beams of various different shapes).

It should be noted that in one or more embodiments, the host payload antenna 307 may comprise one or more reflector dishes including, but not limited to, parabolic reflectors and/or shaped reflectors. In some embodiments, the host payload antenna 307 may comprise one or more multifeed antenna arrays.

The host payload 306 transmits 309 unencrypted host telemetry (i.e. unencrypted SOC Telemetry, which is telemetry data related to the host payload 306 that is utilized by the host SOC 350) to the host communication security module 362. The host communication security module 362 then encrypts the unencrypted host telemetry utilizing the host COMSEC variety to generate encrypted host telemetry (i.e. encrypted SOC Telemetry).

The host communication security module 362 then transmits 393 the encrypted host telemetry to the host payload 306. The host payload 306 then transmits 322 the encrypted host telemetry to the host payload antenna 307. The host payload antenna 307 then transmits 397 the encrypted host telemetry to a SOC ground antenna 317. The host payload antenna 307 transmits 397 the encrypted host telemetry utilizing an inband frequency band(s). It should be noted that, although in FIG. 3 the host SOC 350 is depicted to have its SOC ground antenna 317 located right next to its operations building; in other embodiments, the host SOC 350 may have its SOC ground antenna 317 located very far away from the its operations building (e.g., the ground antenna may be located in another country than the operations building). The host SOC 350 then decrypts the encrypted host telemetry utilizing the host COMSEC variety to generate the unencrypted host telemetry.

The HOC 360 encrypts unencrypted hosted commands (i.e. Unencrypted HOC Commands), by utilizing a hosted communication security (COMSEC) variety, to produce encrypted hosted commands (i.e. encrypted HOC Commands). The hosted commands are commands that are used to configure the hosted payload 305 that is utilized by the HOC 360. It should be noted that the hosted COMSEC variety may include at least one encryption key and/or at least one algorithm (e.g., a Type 1 encryption algorithm or a Type 2 encryption algorithm).

The HOC 360 then transmits 326 the encrypted hosted commands to a hosted gateway antenna 327. Then, the hosted gateway antenna 327 transmits 325 the encrypted hosted commands to a hosted payload antenna 380 on the vehicle 310. The hosted gateway antenna 327 transmits 325 the encrypted hosted commands utilizing an inband frequency band(s) (i.e. a frequency band(s) that is the same frequency band(s) utilized to transmit payload data). The hosted payload antenna 380 on the vehicle 310 then transmits 382 the encrypted hosted commands to a processor 383 on the hosted payload 305. In one or more embodiments, the hosted processor 383 comprises one or more processors. The hosted processor 383 transmits 384 the encrypted hosted commands to a hosted communication security module 365. The hosted communication security module 365 decrypts the encrypted hosted commands utilizing the hosted COMSEC variety to generate unencrypted hosted commands.

It should be noted that the hosted communication security module 365 may comprise one or more communication security modules (e.g., communication security module 3 and communication security module 4, where communication security module 4 is a redundant communication security module that is utilized when there is a failure of communication security module 3), where the extra communication security modules are redundant communication security modules that are utilized when there is a communication security module failure. In addition, the hosted communication security module 365 may comprise one or more processors. In some embodiments, the hosted communication security module 365 and the hosted processor 383 are separate units, as is shown in FIG. 3. In other embodiments, the hosted communication security module 365 and the hosted processor 383 are a single unit.

The hosted communication security module 365 then transmits 386 the unencrypted hosted commands to the hosted processor 383. The hosted payload 305 is reconfigured by the hosted processor 383 according to the unencrypted hosted commands. The reconfiguring of the hosted payload 305 may comprise adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering. Additionally, the reconfiguring of the hosted payload 305 may comprise reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix. After the hosted payload 305 is reconfigured, a hosted payload antenna 380 then transmits (e.g., in one or more antenna beams 381) hosted user data to a hosted user antenna 390 on the ground. It should be noted that in other embodiments, the hosted user antenna 390 may be airborne (e.g., located on an aircraft or satellite) or marine (e.g., located on a ship) rather than terrestrial (e.g., located on the ground) as is shown in FIG. 3.

Also, it should be noted that, although in FIG. 3, antenna beam 381 is shown to include a single circular spot beam; in other embodiments, the antenna beam 381 may include more than one beam as is shown in FIG. 3 (e.g., antenna beam 381 may include multiple beams, and antenna beam 381 may include beams of different shapes than the circular spot beam as is shown in FIG. 3 (e.g., antenna beam 381 may include elliptical beams and/or shaped beams of various different shapes).

It should be noted that in one or more embodiments, the hosted payload antenna 380 may comprise one or more reflector dishes including, but not limited to, parabolic reflectors and/or shaped reflectors. In some embodiments, the host payload antenna 380 may comprise one or more multifeed antenna arrays.

The hosted processor 383 transmits 387 unencrypted hosted telemetry (i.e. unencrypted HOC Telemetry, which is telemetry data related to the hosted payload 305 that is utilized by the HOC 360) to the hosted communication security module 365. The hosted communication security module 365 then encrypts the unencrypted hosted telemetry utilizing the hosted COMSEC variety to generate encrypted hosted telemetry (i.e. encrypted HOC Telemetry).

The hosted communication security module 365 then transmits 388 the encrypted hosted telemetry to the hosted processor 383. The hosted processor 383 then transmits 389 the encrypted hosted telemetry to the hosted payload antenna 380. The hosted payload antenna 380 then transmits 391 the encrypted hosted telemetry to the hosted gateway antenna 327. The hosted payload antenna 380 transmits 391 the encrypted hosted telemetry utilizing an inband frequency band(s). The hosted gateway antenna 327 transmits 392 the encrypted hosted telemetry to the HOC 360. The HOC 360 then decrypts the encrypted hosted telemetry utilizing the hosted COMSEC variety to generate the unencrypted hosted telemetry.

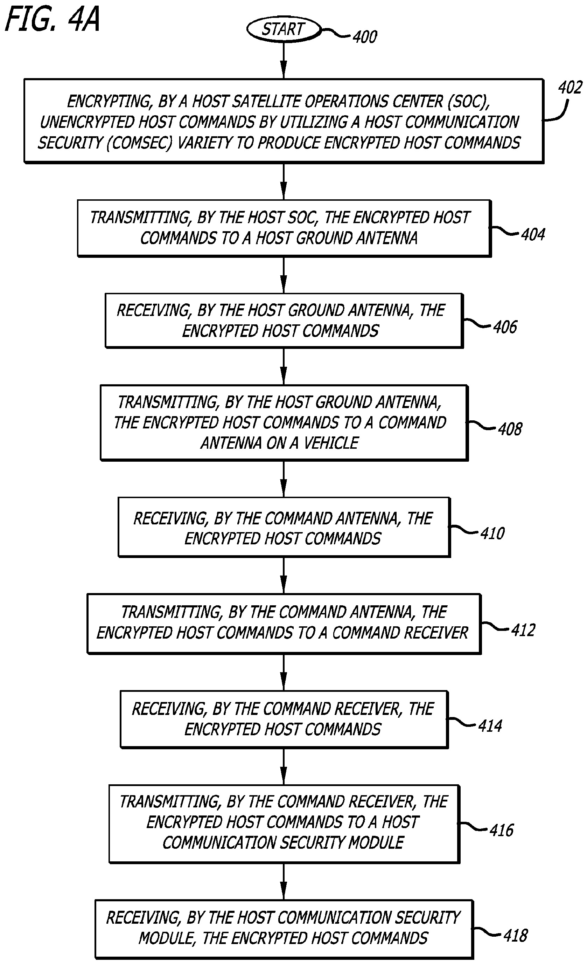

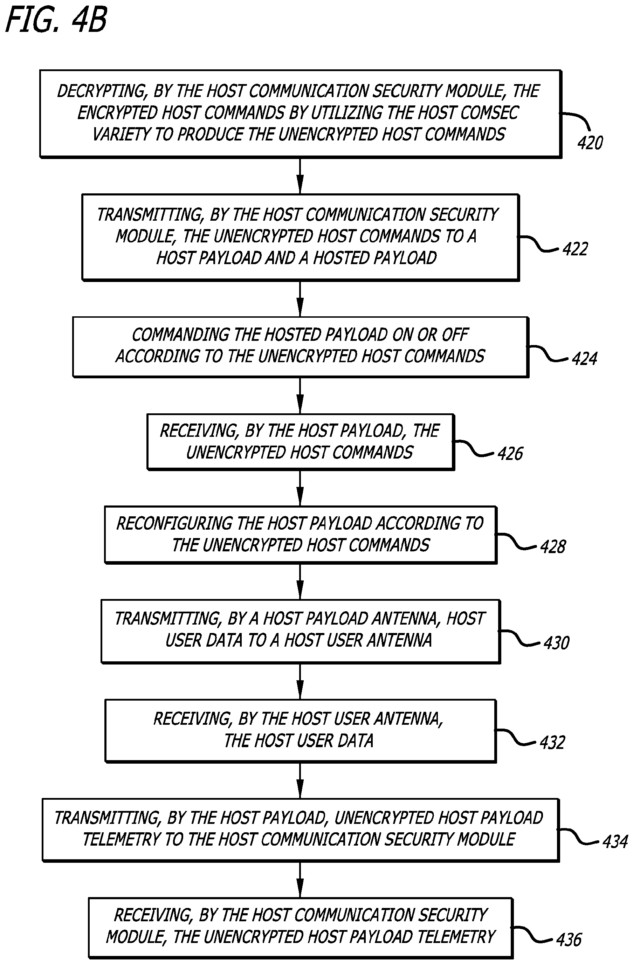

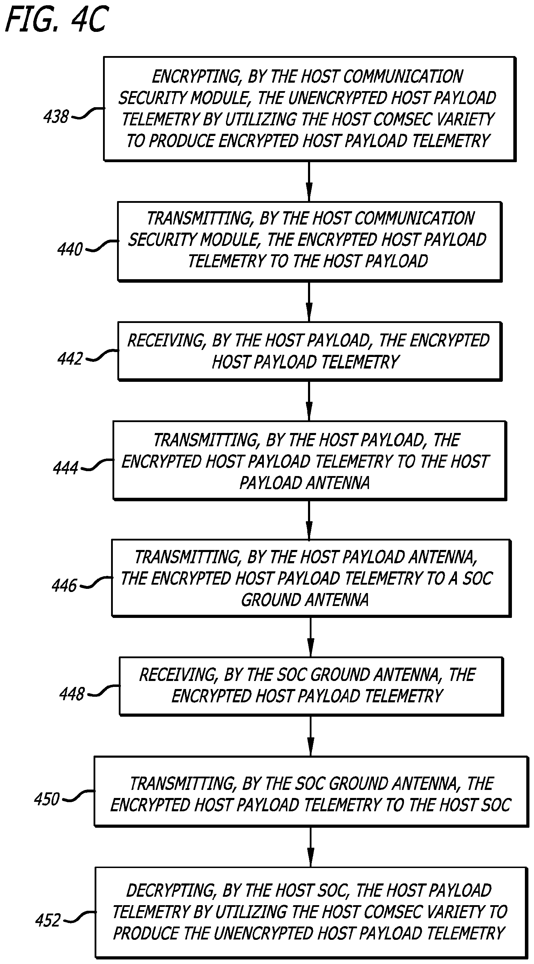

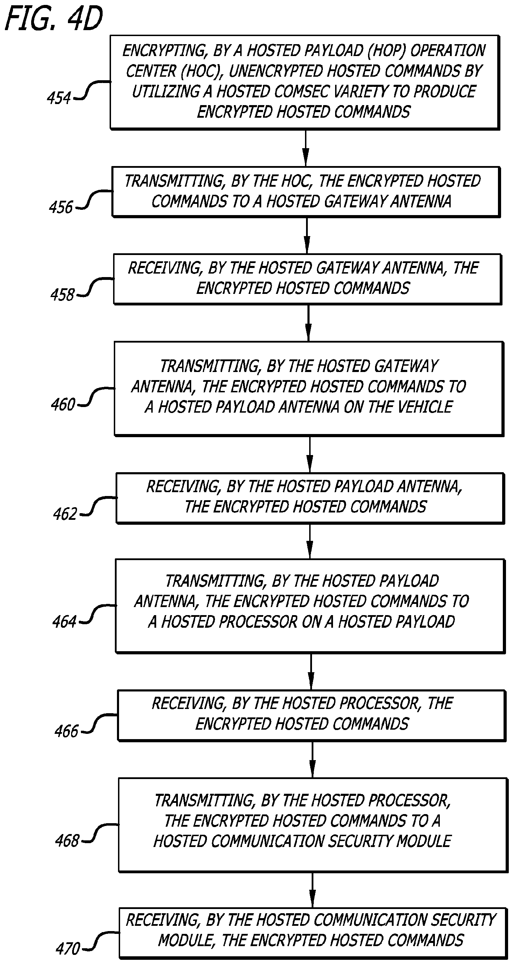

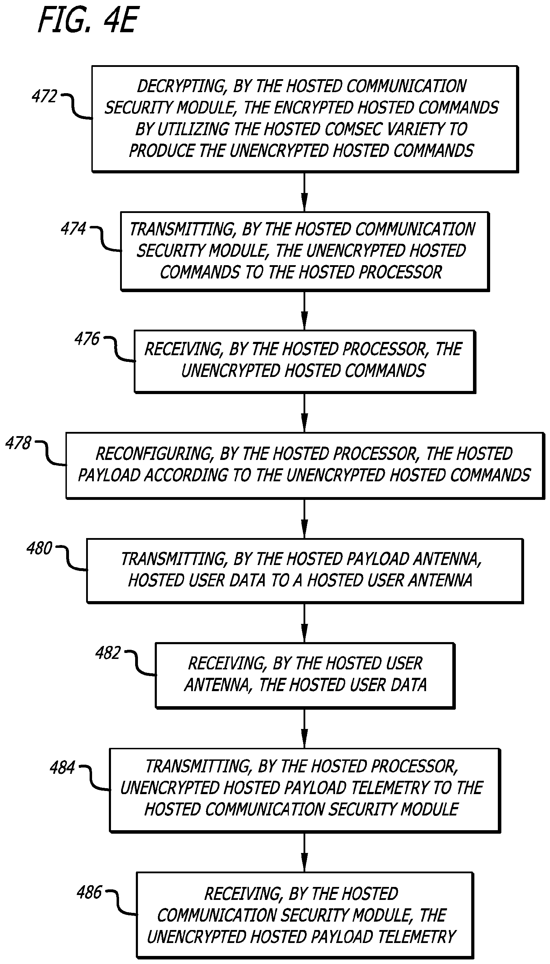

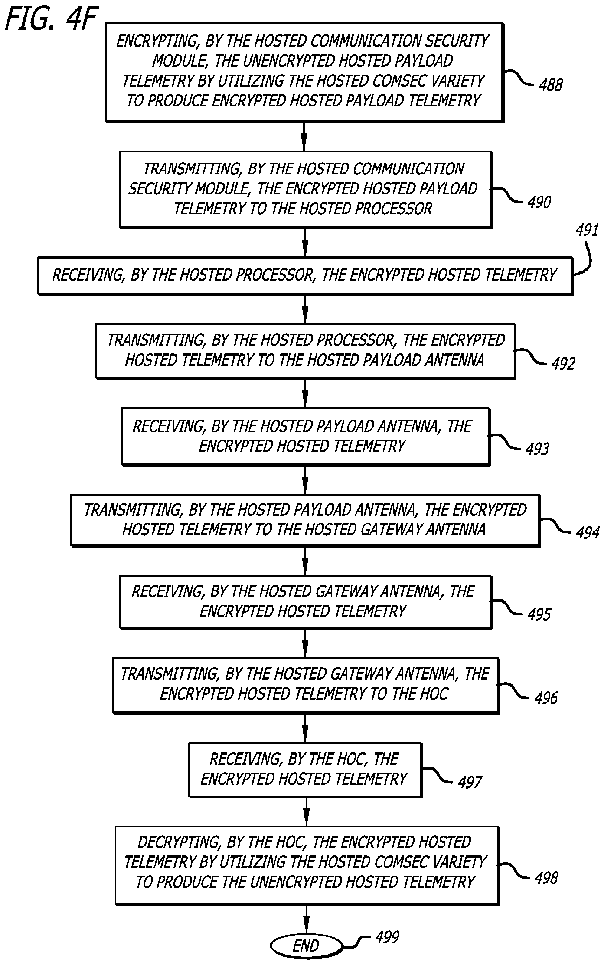

FIGS. 4A, 4B, 4C, 4D, 4E, and 4F together show a flow chart for the disclosed method for secured independent hosted payload operations, where the host commanding is transmitted out-of-band and the host telemetry is transmitted inband, in accordance with at least one embodiment of the present disclosure. At the start 400 of the method, a host satellite operations center (SOC) encrypts unencrypted host commands by utilizing a host communication security (COMSEC) variety to produce encrypted host commands 402. Then, the host SOC transmits the encrypted host commands to a host ground antenna 404. The host ground antenna then receives the encrypted host commands 406. Then, the host ground antenna transmits the encrypted host commands to a command antenna on a vehicle 408. The command antenna then receives the encrypted host commands 410. Then, the command antenna transmits the encrypted host commands to a command receiver 412. The command receiver then receives the encrypted host commands 414. Then, the command receiver transmits the encrypted host commands to a host communication security module 416.

The host communication security module then receives the encrypted host commands 418. Then, the host communication security module decrypts the encrypted host commands by utilizing the host COMSEC variety to produce the unencrypted host commands 420. The host communication security module then transmits the unencrypted host commands to a host payload and a hosted payload 422. The hosted payload is then commanded on or off according to the unencrypted host commands 424. Then, the host payload receives the unencrypted host commands 426. The host payload is then reconfigured according to the unencrypted host commands 428. Then, a host payload antenna transmits host user data to a host user antenna 430. The host user antenna then receives the host user data 432. Then, the host payload transmits unencrypted host payload telemetry to the host communication security module 434.

The host communication security module then receives the unencrypted host payload telemetry 436. Then, the host communication security module encrypts the unencrypted host payload telemetry by utilizing the host COMSEC variety to produce encrypted host payload telemetry 438. The host communication security module then transmits the encrypted host payload telemetry to the host payload 440. Then, the host payload receives the encrypted host payload telemetry 442. The host payload then transmits the encrypted host payload telemetry to the host payload antenna 444. Then, the host payload antenna transmits the encrypted host payload telemetry to a SOC ground antenna 446. The SOC ground antenna then receives the encrypted host payload telemetry 448. Then, the SOC ground antenna transmits the encrypted host payload telemetry to the host SOC 450. The host SOC then decrypts the host payload telemetry by utilizing the host COMSEC variety to produce the unencrypted host payload telemetry 452.

A hosted payload (HoP) operation center (HOC) encrypts unencrypted hosted commands by utilizing a hosted COMSEC variety to produce encrypted hosted commands 454. Then, the HOC transmits the encrypted hosted commands to a hosted gateway antenna 456. The hosted gateway antenna then receives the encrypted hosted commands 458. Then, the hosted gateway antenna transmits the encrypted hosted commands to a hosted payload antenna on the vehicle 460. The hosted payload antenna then receives the encrypted hosted commands 462. Then, the hosted payload antenna transmits the encrypted hosted commands to a hosted processor on a hosted payload 464. The hosted processor then receives the encrypted hosted commands 466. Then, the hosted processor transmits the encrypted hosted commands to a hosted communication security module 468.

The hosted communication security module the receives the encrypted hosted commands 470. Then, the hosted communication security module decrypts the encrypted hosted commands by utilizing the hosted COMSEC variety to produce the unencrypted hosted commands 472. The hosted communication security module then transmits the unencrypted hosted commands to the hosted processor 474. Then, the hosted processor receives the unencrypted hosted commands 476. The hosted processor then reconfigures the hosted payload according to the unencrypted hosted commands 478. Then, the hosted payload antenna transmits hosted user data to a hosted user antenna 480. The hosted user antenna then receives the hosted user data 482. Then, the hosted processor transmits unencrypted hosted payload telemetry to the hosted communication security module 484.

The hosted communication security module then receives the unencrypted hosted payload telemetry 486. Then, the hosted communication security module encrypts the unencrypted hosted payload telemetry by utilizing the hosted COMSEC variety to produce encrypted hosted payload telemetry 488. The hosted communication security module then transmits the encrypted hosted payload telemetry to the hosted processor 490. Then, the hosted processor receives the encrypted hosted telemetry 491. The hosted processor then transmits the encrypted hosted telemetry to the hosted payload antenna 492. Then, the hosted payload antenna receives the encrypted hosted telemetry 493. The hosted payload antenna then transmits the encrypted hosted telemetry to the hosted gateway antenna 494. Then, the hosted gateway antenna receives the encrypted hosted telemetry 495. The hosted gateway antenna then transmits the encrypted hosted telemetry to the HOC 496. Then, the HOC receives the encrypted hosted telemetry 497. The HOC then decrypts the encrypted hosted telemetry by utilizing the hosted COMSEC variety to produce the unencrypted hosted telemetry 498. Then, the method ends 499.

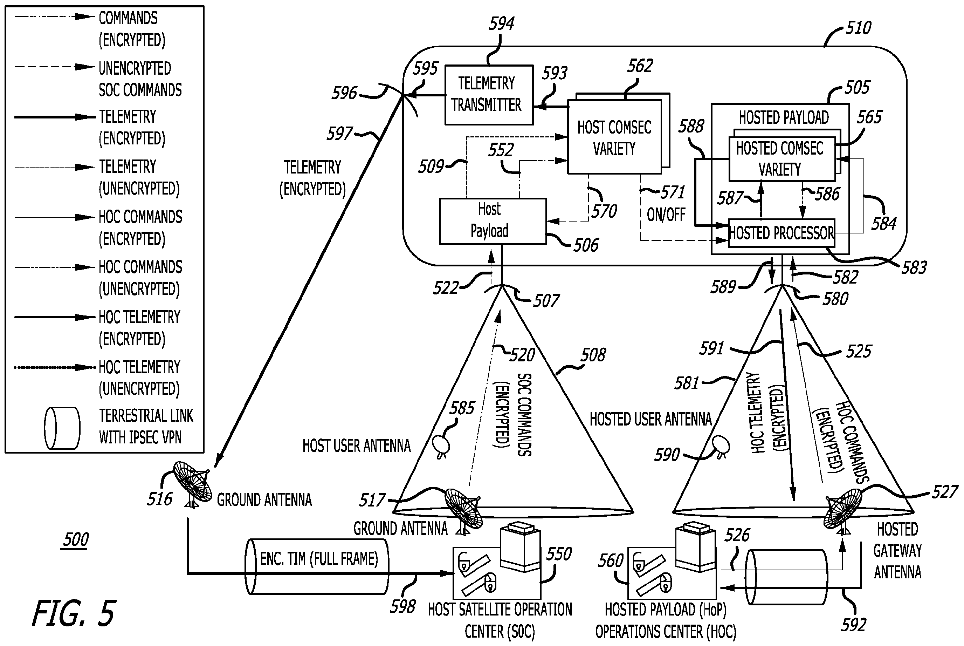

FIG. 5 is a diagram 500 showing the disclosed system for secured independent hosted payload operations, where the host commanding is transmitted inband and the host telemetry is transmitted out-of-band, in accordance with at least one embodiment of the present disclosure. In this figure, a vehicle 510, a host satellite operations center (SOC) 550, and a hosted payload (HoP) operation center (HOC) 560 are shown. Various different types of vehicles may be employed for the vehicle 510 including, but not limited to, an airborne vehicle. And, various different types of airborne vehicles may be employed for the vehicle including, but not limited to, a satellite, an aircraft, an unmanned aerial vehicle (UAV), and a space plane.

In the case of a satellite being employed for the vehicle 510, it should be noted that satellites typically include computer-controlled systems. A satellite generally includes a bus and a payload (e.g., a host payload 506 and/or a hosted payload(s) 505). The bus may include systems (which include components) that control the satellite. These systems perform tasks, such as power generation and control, thermal control, telemetry, attitude control, orbit control, and other suitable operations.

The payload of the satellite provides functions to users of the satellite. The payload may include antennas, transponders, and other suitable devices. For example, with respect to communications, the payload in a satellite may be used to provide Internet access, telephone communications, radio, television, and/or other types of communications. It should be noted that, in one or more embodiments, the satellite (i.e. the vehicle 510) comprises multiple separate payloads, which are a host payload 506 and a hosted payload(s) 505. Different entities may use the different payloads on the satellite. For example, a host user (e.g., an owner of the satellite) may utilize the host payload 506, and the host user may lease out the hosted payload 505 to a hosted user (e.g., a customer) that utilizes the hosted payload 505.

Leasing a payload(s) (e.g., a hosted payload(s)) to a customer(s) may increase the revenues that a user (e.g., the host user) of a satellite can obtain. Further, a customer may use a subset of the total resources in a satellite for a cost that is less than the cost for the customer to purchase and operate a satellite, to build and operate a satellite, or to lease an entire satellite.

During operation, the host SOC 550 encrypts unencrypted host commands (i.e. Unencrypted SOC Commands), by utilizing a host communication security (COMSEC) variety, to produce encrypted host commands (i.e. encrypted SOC Commands). The host commands are commands that are used to configure the host payload 506 that is utilized by the host SOC 550. It should be noted that the host COMSEC variety may include at least one encryption key and/or at least one algorithm (e.g., a Type 1 encryption algorithm or a Type 2 encryption algorithm).

Then, the SOC ground antenna 517 transmits 520 the encrypted host commands to a host payload antenna 507 on the vehicle 510. The SOC ground antenna 517 transmits 520 the encrypted host commands utilizing an inband frequency band(s) (i.e. a frequency band(s) that is the same frequency band(s) utilized to transmit payload data). It should be noted that, although in FIG. 5 the host SOC 550 is depicted to have its SOC ground antenna 517 located right next to its operations building; in other embodiments, the host SOC 550 may have its SOC ground antenna 517 located very far away from the its operations building (e.g., the ground antenna may be located in another country than the operations building). The host payload antenna 507 on the vehicle 510 then transmits 522 the encrypted host commands to the host payload 506.

The host payload 506 then transmits 552 the encrypted host commands to a host communication security module 562. The host communication security module 562 decrypts the encrypted host commands utilizing the host COMSEC variety to generate unencrypted host commands.

It should be noted that the host communication security module 562 may comprise one or more communication security modules (e.g., communication security module 1 and communication security module 2, where communication security module 2 is a redundant communication security module that is utilized when there is a failure of communication security module 1), where the extra communication security modules are redundant communication security modules that are utilized when there is a communication security module failure. In addition, the host communication security module 562 may comprise one or more processors.

The host communication security module 562 then transmits 570 the unencrypted host commands to the host payload 506. The host payload 506 is reconfigured according to the unencrypted host commands. The reconfiguring of the host payload 506 may comprise adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering. Additionally, the reconfiguring of the host payload 506 may comprise reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix. In one or more embodiments, the host payload comprises 506 one or more processors.

After the host payload 506 is reconfigured, a host payload antenna 507 then transmits (e.g., in one or more antenna beams 508) host user data to a host user antenna 585 on the ground. It should be noted that in other embodiments, the host user antenna 585 may be airborne (e.g., located on an aircraft or satellite) or marine (e.g., located on a ship) rather than terrestrial (e.g., located on the ground) as is shown in FIG. 5. The host communication security module 562 then transmits 571 the unencrypted host commands to the hosted payload 505 to command the hosted payload 505 on or off according to the unencrypted host commands.

Also, it should be noted that, although in FIG. 5, antenna beam 508 is shown to include a single circular spot beam; in other embodiments, the antenna beam 508 may include more than one beam as is shown in FIG. 5 (e.g., antenna beam 508 may include multiple beams, and antenna beam 508 may include beams of different shapes than the circular spot beam as is shown in FIG. 5 (e.g., antenna beam 508 may include elliptical beams and/or shaped beams of various different shapes).

It should be noted that in one or more embodiments, the host payload antenna 507 may comprise one or more reflector dishes including, but not limited to, parabolic reflectors and/or shaped reflectors. In some embodiments, the host payload antenna 507 may comprise one or more multifeed antenna arrays.

The host payload 506 transmits 509 unencrypted host telemetry (i.e. unencrypted SOC Telemetry, which is telemetry data related to the host payload 506 that is utilized by the host SOC 550) to the host communication security module 562. The host communication security module 562 then encrypts the unencrypted host telemetry utilizing the host COMSEC variety to generate encrypted host telemetry (i.e. encrypted SOC Telemetry).

The host communication security module 562 then transmits 593 the encrypted host telemetry to a telemetry transmitter 594. The telemetry transmitter 594 then transmits 595 the encrypted host telemetry to a telemetry antenna 596. The telemetry antenna 596 then transmits 597 the encrypted host telemetry to the host ground antenna 516. The telemetry antenna 596 transmits 597 the encrypted host telemetry utilizing an out-of-band frequency band(s). The host ground antenna 516 transmits 598 the encrypted host telemetry to the host SOC 550. The host SOC 550 then decrypts the encrypted host telemetry utilizing the host COMSEC variety to generate the unencrypted host telemetry.

The HOC 560 encrypts unencrypted hosted commands (i.e. Unencrypted HOC Commands), by utilizing a hosted communication security (COMSEC) variety, to produce encrypted hosted commands (i.e. encrypted HOC Commands). The hosted commands are commands that are used to configure the hosted payload 505 that is utilized by the HOC 560. It should be noted that the hosted COMSEC variety may include at least one encryption key and/or at least one algorithm (e.g., a Type 1 encryption algorithm or a Type 2 encryption algorithm).

The HOC 560 then transmits 526 the encrypted hosted commands to a hosted gateway antenna 527. Then, the hosted gateway antenna 527 transmits 525 the encrypted hosted commands to a hosted payload antenna 580 on the vehicle 510. The hosted gateway antenna 527 transmits 525 the encrypted hosted commands utilizing an inband frequency band(s) (i.e. a frequency band(s) that is the same frequency band(s) utilized to transmit payload data). The hosted payload antenna 580 on the vehicle 510 then transmits 582 the encrypted hosted commands to a processor 583 on the hosted payload 505. In one or more embodiments, the hosted processor 583 comprises one or more processors. The hosted processor 583 transmits 584 the encrypted hosted commands to a hosted communication security module 565. The hosted communication security module 565 decrypts the encrypted hosted commands utilizing the hosted COMSEC variety to generate unencrypted hosted commands.

It should be noted that the hosted communication security module 565 may comprise one or more communication security modules (e.g., communication security module 3 and communication security module 4, where communication security module 4 is a redundant communication security module that is utilized when there is a failure of communication security module 3), where the extra communication security modules are redundant communication security modules that are utilized when there is a communication security module failure. In addition, the hosted communication security module 565 may comprise one or more processors. In some embodiments, the hosted communication security module 565 and the hosted processor 583 are separate units, as is shown in FIG. 5. In other embodiments, the hosted communication security module 565 and the hosted processor 583 are a single unit.

The hosted communication security module 565 then transmits 586 the unencrypted hosted commands to the hosted processor 583. The hosted payload 505 is reconfigured by the hosted processor 583 according to the unencrypted hosted commands. The reconfiguring of the hosted payload 505 may comprise adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering. Additionally, the reconfiguring of the hosted payload 505 may comprise reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix. After the hosted payload 505 is reconfigured, a hosted payload antenna 580 then transmits (e.g., in one or more antenna beams 581) hosted user data to a hosted user antenna 590 on the ground. It should be noted that in other embodiments, the hosted user antenna 590 may be airborne (e.g., located on an aircraft or satellite) or marine (e.g., located on a ship) rather than terrestrial (e.g., located on the ground) as is shown in FIG. 5.

Also, it should be noted that, although in FIG. 5, antenna beam 581 is shown to include a single circular spot beam; in other embodiments, the antenna beam 581 may include more than one beam as is shown in FIG. 5 (e.g., antenna beam 581 may include multiple beams, and antenna beam 581 may include beams of different shapes than the circular spot beam as is shown in FIG. 5 (e.g., antenna beam 581 may include elliptical beams and/or shaped beams of various different shapes).

It should be noted that in one or more embodiments, the hosted payload antenna 580 may comprise one or more reflector dishes including, but not limited to, parabolic reflectors and/or shaped reflectors. In some embodiments, the host payload antenna 580 may comprise one or more multifeed antenna arrays.

The hosted processor 583 transmits 587 unencrypted hosted telemetry (i.e. unencrypted HOC Telemetry, which is telemetry data related to the hosted payload 505 that is utilized by the HOC 560) to the hosted communication security module 565. The hosted communication security module 565 then encrypts the unencrypted hosted telemetry utilizing the hosted COMSEC variety to generate encrypted hosted telemetry (i.e. encrypted HOC Telemetry).

The hosted communication security module 565 then transmits 588 the encrypted hosted telemetry to the hosted processor 583. The hosted processor 583 then transmits 589 the encrypted hosted telemetry to the hosted payload antenna 580. The hosted payload antenna 580 then transmits 591 the encrypted hosted telemetry to the hosted gateway antenna 527. The hosted payload antenna 580 transmits 591 the encrypted hosted telemetry utilizing an inband frequency band(s). The hosted gateway antenna 527 transmits 592 the encrypted hosted telemetry to the HOC 560. The HOC 560 then decrypts the encrypted hosted telemetry utilizing the hosted COMSEC variety to generate the unencrypted hosted telemetry.

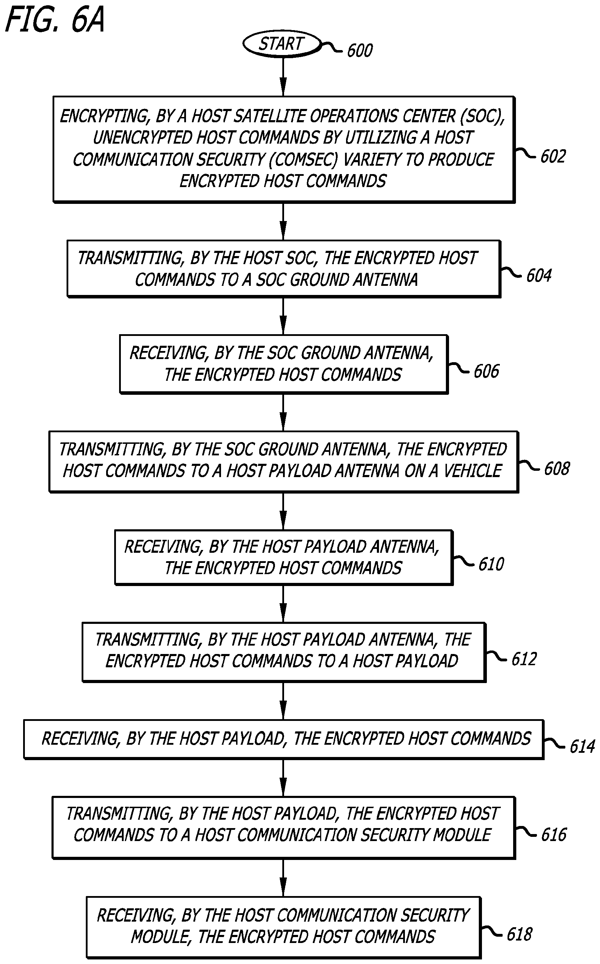

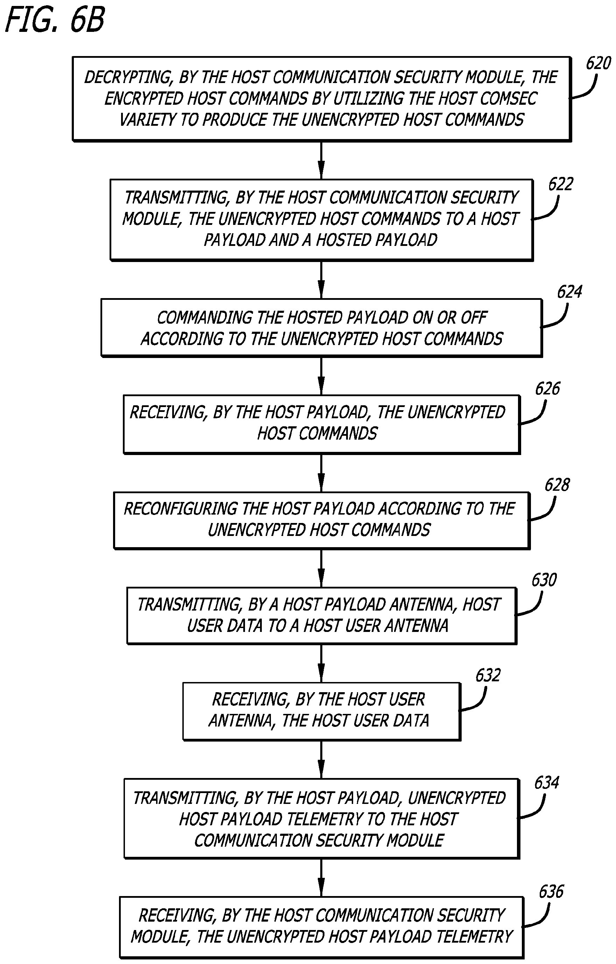

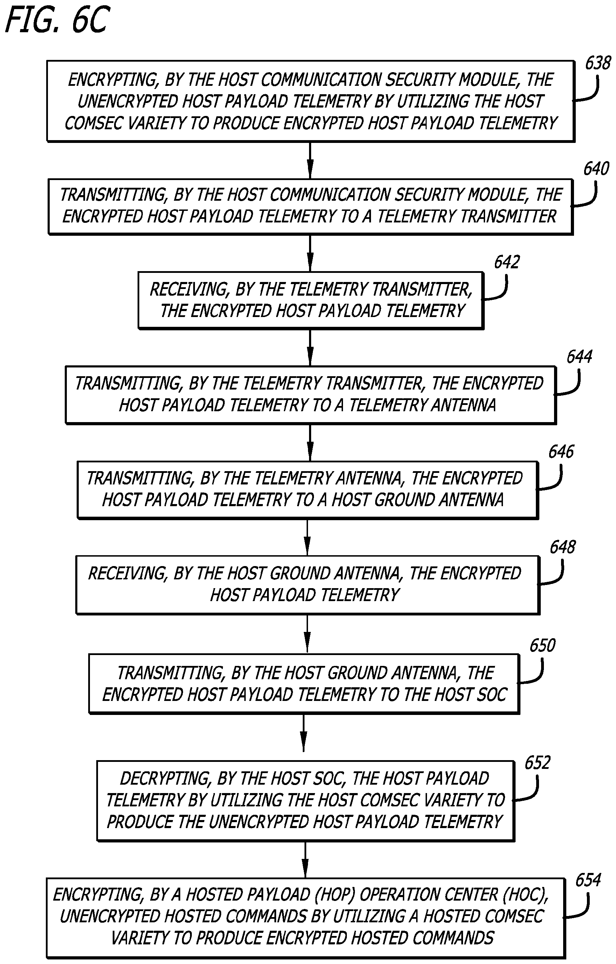

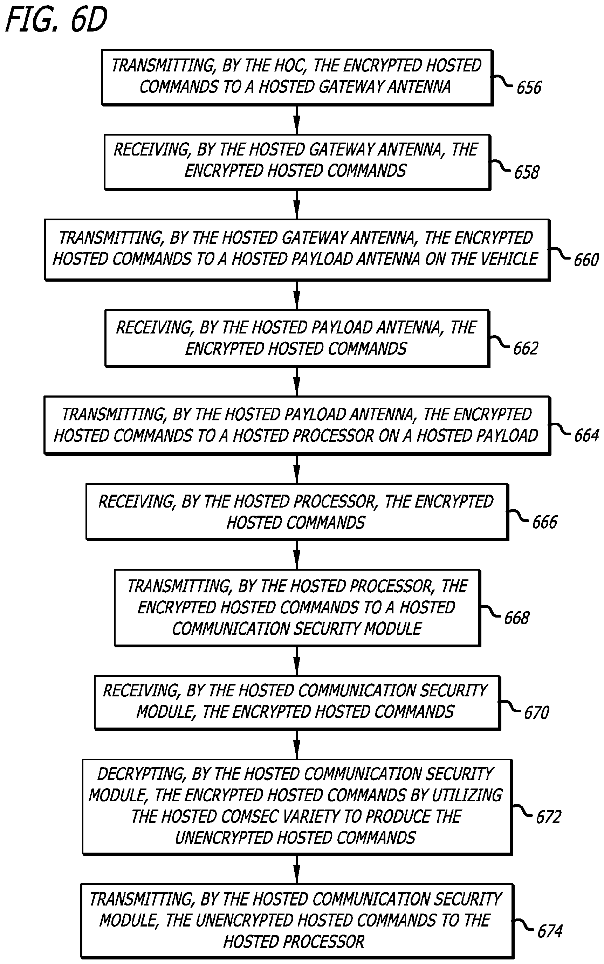

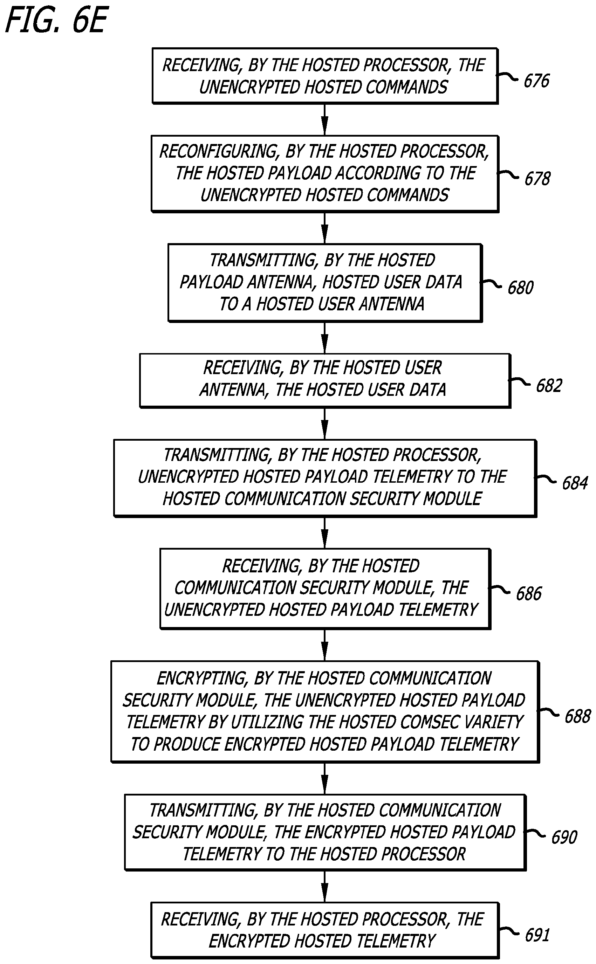

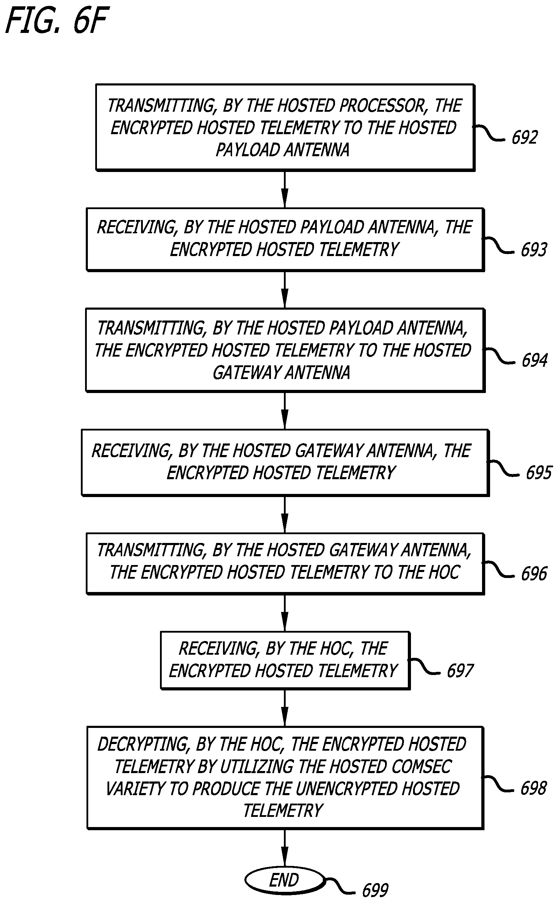

FIGS. 6A, 6B, 6C, 6D, 6E, and 6F together show a flow chart for the disclosed method for secured independent hosted payload operations, where the host commanding is transmitted inband and the host telemetry is transmitted out-of-band, in accordance with at least one embodiment of the present disclosure. At the start 600 of the method, a host satellite operations center (SOC) encrypts unencrypted host commands by utilizing a host communication security (COMSEC) variety to produce encrypted host commands 602. Then, the host SOC transmits the encrypted host commands to a SOC ground antenna 604. The SOC ground antenna then receives the encrypted host commands 606. Then, the SOC ground antenna transmits the encrypted host commands to a host payload antenna on a vehicle 608. The host payload antenna then receives the encrypted host commands 610. Then, the host payload antenna transmits the encrypted host commands to a host payload 612. The host payload then receives the encrypted host commands 614. Then, the host payload transmits the encrypted host commands to a host communication security module 616.

The host communication security module then receives the encrypted host commands 618. Then, the host communication security module decrypts the encrypted host commands by utilizing the host COMSEC variety to produce the unencrypted host commands 620. The host communication security module then transmits the unencrypted host commands to a host payload and a hosted payload 622. Then, the hosted payload is commanded on or off according to the unencrypted host commands 624. The host payload then receives the unencrypted host commands 626. Then, the host payload is reconfigured according to the unencrypted host commands 628. A host payload antenna then transmits host user data to a host user antenna 630. Then, the host user antenna receives the host user data 632. The host payload then transmits unencrypted host payload telemetry to the host communication security module 634.

Then, the host communication security module receives the unencrypted host payload telemetry 636. The host communication security module then encrypts the unencrypted host payload telemetry by utilizing the host COMSEC variety to produce encrypted host payload telemetry 638. Then, the host communication security module transits the encrypted host payload telemetry to a telemetry transmitter 640. The telemetry transmitter then receives the encrypted host payload telemetry 642. Then, the telemetry transmitter transmits the encrypted host payload telemetry to a telemetry antenna 644. The telemetry antenna then transmits the encrypted host payload telemetry to a host ground antenna 646. Then, the host ground antenna receives the encrypted host payload telemetry 648. The host ground antenna then transmits the encrypted host payload telemetry to the host SOC 650. Then, the host SOC decrypts the host payload telemetry by utilizing the host COMSEC variety to produce the unencrypted host payload telemetry 652.

A hosted payload (HoP) operation center (HOC) encrypts unencrypted hosted commands by utilizing a hosted COMSEC variety to produce encrypted hosted commands 654. Then, the HOC transmits the encrypted hosted commands to a hosted gateway antenna 656. The hosted gateway antenna then receives the encrypted hosted commands 658. Then, the hosted gateway antenna transmits the encrypted hosted commands to a hosted payload antenna on the vehicle 660. The hosted payload antenna then receives the encrypted hosted commands 662. Then, the hosted payload antenna transmits the encrypted hosted commands to a hosted processor on a hosted payload 664. The hosted processor then receives the encrypted hosted commands 666. Then, the hosted processor transmits the encrypted hosted commands to a hosted communication security module 668.

The hosted communication security module then receives the encrypted hosted commands 670. Then, the hosted communication security module decrypts the encrypted hosted commands by utilizing the hosted COMSEC variety to produce the unencrypted hosted commands 672. The hosted communication security module then transmits the unencrypted hosted commands to the hosted processor 674. Then, the hosted processor receives the unencrypted hosted commands 676. The hosted processor then reconfigures the hosted payload according to the unencrypted hosted commands 678. Then, the hosted payload antenna transmits hosted user data to a hosted user antenna 680. The hosted user antenna then receives the hosted user data 682. Then, the hosted processor transmits unencrypted hosted payload telemetry to the hosted communication security module 684.

The hosted communication security module then receives the unencrypted hosted payload telemetry 686. Then, the hosted communication security module encrypts the unencrypted hosted payload telemetry by utilizing the hosted COMSEC variety to produce encrypted hosted payload telemetry 688. The hosted communication security module then transmits the encrypted hosted payload telemetry to the hosted processor 690. Then, the hosted processor receives the encrypted hosted telemetry 691. The hosted processor then transmits the encrypted hosted telemetry to the hosted payload antenna 692. Then, the hosted payload antenna receives the encrypted hosted telemetry 693. The hosted payload antenna then transmits the encrypted hosted telemetry to the hosted gateway antenna 694. Then, the hosted gateway antenna receives the encrypted hosted telemetry 695. The hosted gateway antenna then transmits the encrypted hosted telemetry to the HOC 696. Then, the HOC receives the encrypted hosted telemetry 697. The HOC then decrypts the encrypted hosted telemetry by utilizing the hosted COMSEC variety to produce the unencrypted hosted telemetry 698. Then, the method ends 699.

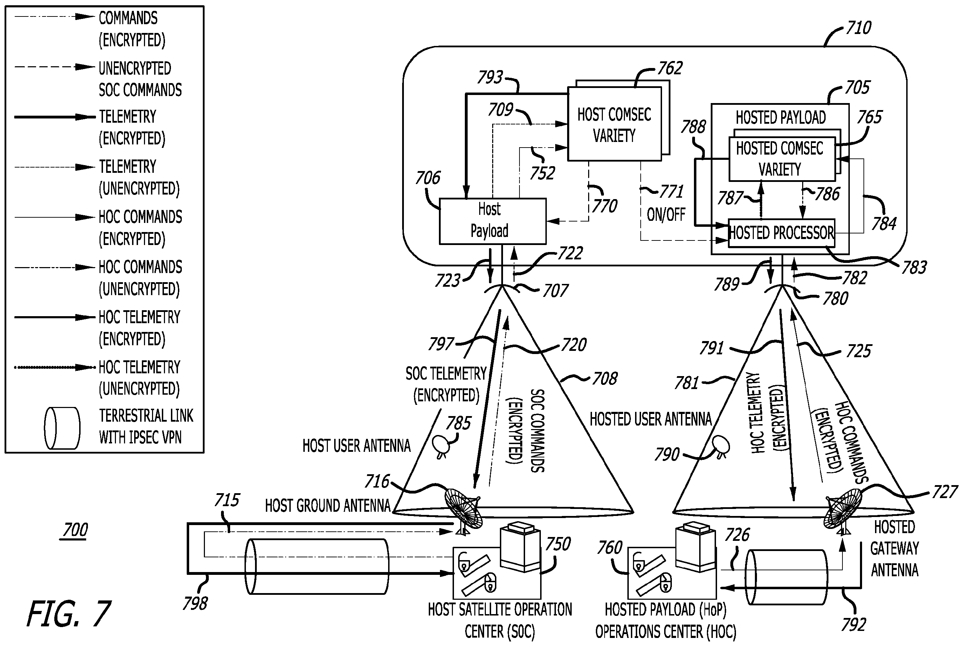

FIG. 7 is a diagram 700 showing the disclosed system for secured independent hosted payload operations, where the host commanding and host telemetry are both transmitted inband, in accordance with at least one embodiment of the present disclosure. In this figure, a vehicle 710, a host satellite operations center (SOC) 750, and a hosted payload (HoP) operation center (HOC) 760 are shown. Various different types of vehicles may be employed for the vehicle 710 including, but not limited to, an airborne vehicle. And, various different types of airborne vehicles may be employed for the vehicle including, but not limited to, a satellite, an aircraft, an unmanned aerial vehicle (UAV), and a space plane.

In the case of a satellite being employed for the vehicle 710, it should be noted that satellites typically include computer-controlled systems. A satellite generally includes a bus and a payload (e.g., a host payload 706 and/or a hosted payload(s) 705). The bus may include systems (which include components) that control the satellite. These systems perform tasks, such as power generation and control, thermal control, telemetry, attitude control, orbit control, and other suitable operations.

The payload of the satellite provides functions to users of the satellite. The payload may include antennas, transponders, and other suitable devices. For example, with respect to communications, the payload in a satellite may be used to provide Internet access, telephone communications, radio, television, and/or other types of communications. It should be noted that, in one or more embodiments, the satellite (i.e. the vehicle 710) comprises multiple separate payloads, which are a host payload 706 and a hosted payload(s) 705. Different entities may use the different payloads on the satellite. For example, a host user (e.g., an owner of the satellite) may utilize the host payload 706, and the host user may lease out the hosted payload 705 to a hosted user (e.g., a customer) that utilizes the hosted payload 705.

Leasing a payload(s) (e.g., a hosted payload(s)) to a customer(s) may increase the revenues that a user (e.g., the host user) of a satellite can obtain. Further, a customer may use a subset of the total resources in a satellite for a cost that is less than the cost for the customer to purchase and operate a satellite, to build and operate a satellite, or to lease an entire satellite.

During operation, the host SOC 750 encrypts unencrypted host commands (i.e. Unencrypted SOC Commands), by utilizing a host communication security (COMSEC) variety, to produce encrypted host commands (i.e. encrypted SOC Commands). The host commands are commands that are used to configure the host payload 706 that is utilized by the host SOC 750. It should be noted that the host COMSEC variety may include at least one encryption key and/or at least one algorithm (e.g., a Type 1 encryption algorithm or a Type 2 encryption algorithm).

Then, the host SOC 750 transmits 715 the encrypted host commands to a host ground antenna 716. The host ground antenna 716 transmits 720 the encrypted host commands to a host payload antenna 707 on the vehicle 710. The host ground antenna 716 transmits 720 the encrypted host commands utilizing an inband frequency band(s) (i.e. a frequency band(s) that is the same frequency band(s) utilized to transmit payload data). It should be noted that, although in FIG. 7 the host SOC 750 is depicted to have the host ground antenna 716 located right next to its operations building; in other embodiments, the host SOC 750 may have the host ground antenna 716 located very far away from the its operations building (e.g., the ground antenna may be located in another country than the operations building). The host payload antenna 707 on the vehicle 710 then transmits 722 the encrypted host commands to the host payload 706.

The host payload 706 then transmits 752 the encrypted host commands to a host communication security module 762. The host communication security module 762 decrypts the encrypted host commands utilizing the host COMSEC variety to generate unencrypted host commands.

It should be noted that the host communication security module 762 may comprise one or more communication security modules (e.g., communication security module 1 and communication security module 2, where communication security module 2 is a redundant communication security module that is utilized when there is a failure of communication security module 1), where the extra communication security modules are redundant communication security modules that are utilized when there is a communication security module failure. In addition, the host communication security module 762 may comprise one or more processors.

The host communication security module 762 then transmits 770 the unencrypted host commands to the host payload 706. The host payload 706 is reconfigured according to the unencrypted host commands. The reconfiguring of the host payload 706 may comprise adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering. Additionally, the reconfiguring of the host payload 706 may comprise reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix. In one or more embodiments, the host payload comprises 706 one or more processors.

After the host payload 706 is reconfigured, a host payload antenna 707 then transmits (e.g., in one or more antenna beams 708) host user data to a host user antenna 785 on the ground. It should be noted that in other embodiments, the host user antenna 785 may be airborne (e.g., located on an aircraft or satellite) or marine (e.g., located on a ship) rather than terrestrial (e.g., located on the ground) as is shown in FIG. 7. The host communication security module 762 then transmits 771 the unencrypted host commands to the hosted payload 705 to command the hosted payload 705 on or off according to the unencrypted host commands.

Also, it should be noted that, although in FIG. 7, antenna beam 708 is shown to include a single circular spot beam; in other embodiments, the antenna beam 708 may include more than one beam as is shown in FIG. 7 (e.g., antenna beam 708 may include multiple beams, and antenna beam 708 may include beams of different shapes than the circular spot beam as is shown in FIG. 7 (e.g., antenna beam 708 may include elliptical beams and/or shaped beams of various different shapes).

It should be noted that in one or more embodiments, the host payload antenna 707 may comprise one or more reflector dishes including, but not limited to, parabolic reflectors and/or shaped reflectors. In some embodiments, the host payload antenna 707 may comprise one or more multifeed antenna arrays.

The host payload 706 transmits 709 unencrypted host telemetry (i.e. unencrypted SOC Telemetry, which is telemetry data related to the host payload 706 that is utilized by the host SOC 750) to the host communication security module 762. The host communication security module 762 then encrypts the unencrypted host telemetry utilizing the host COMSEC variety to generate encrypted host telemetry (i.e. encrypted SOC Telemetry).

The host communication security module 762 then transmits 793 the encrypted host telemetry to the host payload 706. The host payload 706 then transmits 723 the encrypted host telemetry to the host payload antenna 707. The host payload antenna 707 then transmits 797 the encrypted host telemetry to the host ground antenna 716. The host payload antenna 707 transmits 797 the encrypted host telemetry utilizing an inband frequency band(s). The host ground antenna 716 transmits 798 the encrypted host telemetry to the host SOC 750. The host SOC 750 then decrypts the encrypted host telemetry utilizing the host COMSEC variety to generate the unencrypted host telemetry.

The HOC 760 encrypts unencrypted hosted commands (i.e. Unencrypted HOC Commands), by utilizing a hosted communication security (COMSEC) variety, to produce encrypted hosted commands (i.e. encrypted HOC Commands). The hosted commands are commands that are used to configure the hosted payload 705 that is utilized by the HOC 760. It should be noted that the hosted COMSEC variety may include at least one encryption key and/or at least one algorithm (e.g., a Type 1 encryption algorithm or a Type 2 encryption algorithm).

The HOC 760 then transmits 726 the encrypted hosted commands to a hosted gateway antenna 727. Then, the hosted gateway antenna 727 transmits 725 the encrypted hosted commands to a hosted payload antenna 780 on the vehicle 710. The hosted gateway antenna 727 transmits 725 the encrypted hosted commands utilizing an inband frequency band(s) (i.e. a frequency band(s) that is the same frequency band(s) utilized to transmit payload data). The hosted payload antenna 780 on the vehicle 710 then transmits 782 the encrypted hosted commands to a processor 783 on the hosted payload 705. In one or more embodiments, the hosted processor 783 comprises one or more processors. The hosted processor 783 transmits 784 the encrypted hosted commands to a hosted communication security module 765. The hosted communication security module 765 decrypts the encrypted hosted commands utilizing the hosted COMSEC variety to generate unencrypted hosted commands.

It should be noted that the hosted communication security module 765 may comprise one or more communication security modules (e.g., communication security module 3 and communication security module 4, where communication security module 4 is a redundant communication security module that is utilized when there is a failure of communication security module 3), where the extra communication security modules are redundant communication security modules that are utilized when there is a communication security module failure. In addition, the hosted communication security module 765 may comprise one or more processors. In some embodiments, the hosted communication security module 765 and the hosted processor 783 are separate units, as is shown in FIG. 7. In other embodiments, the hosted communication security module 765 and the hosted processor 783 are a single unit.

The hosted communication security module 765 then transmits 786 the unencrypted hosted commands to the hosted processor 783. The hosted payload 705 is reconfigured by the hosted processor 783 according to the unencrypted hosted commands. The reconfiguring of the hosted payload 705 may comprise adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power (EIRP) for at least one of the at least one beam, transponder channels, or beam steering. Additionally, the reconfiguring of the hosted payload 705 may comprise reconfiguring at least one of: the host payload antenna, at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix. After the hosted payload 705 is reconfigured, a hosted payload antenna 780 then transmits (e.g., in one or more antenna beams 781) hosted user data to a hosted user antenna 790 on the ground. It should be noted that in other embodiments, the hosted user antenna 170 may be airborne (e.g., located on an aircraft or satellite) or marine (e.g., located on a ship) rather than terrestrial (e.g., located on the ground) as is shown in FIG. 7.

Also, it should be noted that, although in FIG. 7, antenna beam 781 is shown to include a single circular spot beam; in other embodiments, the antenna beam 781 may include more than one beam as is shown in FIG. 7 (e.g., antenna beam 781 may include multiple beams, and antenna beam 781 may include beams of different shapes than the circular spot beam as is shown in FIG. 7 (e.g., antenna beam 781 may include elliptical beams and/or shaped beams of various different shapes).

It should be noted that in one or more embodiments, the hosted payload antenna 780 may comprise one or more reflector dishes including, but not limited to, parabolic reflectors and/or shaped reflectors. In some embodiments, the host payload antenna 780 may comprise one or more multifeed antenna arrays.

The hosted processor 783 transmits 787 unencrypted hosted telemetry (i.e. unencrypted HOC Telemetry, which is telemetry data related to the hosted payload 705 that is utilized by the HOC 760) to the hosted communication security module 765. The hosted communication security module 765 then encrypts the unencrypted hosted telemetry utilizing the hosted COMSEC variety to generate encrypted hosted telemetry (i.e. encrypted HOC Telemetry).

The hosted communication security module 765 then transmits 788 the encrypted hosted telemetry to the hosted processor 783. The hosted processor 783 then transmits 789 the encrypted hosted telemetry to the hosted payload antenna 780. The hosted payload antenna 780 then transmits 791 the encrypted hosted telemetry to the hosted gateway antenna 727. The hosted payload antenna 780 transmits 791 the encrypted hosted telemetry utilizing an inband frequency band(s). The hosted gateway antenna 727 transmits 792 the encrypted hosted telemetry to the HOC 760. The HOC 760 then decrypts the encrypted hosted telemetry utilizing the hosted COMSEC variety to generate the unencrypted hosted telemetry.

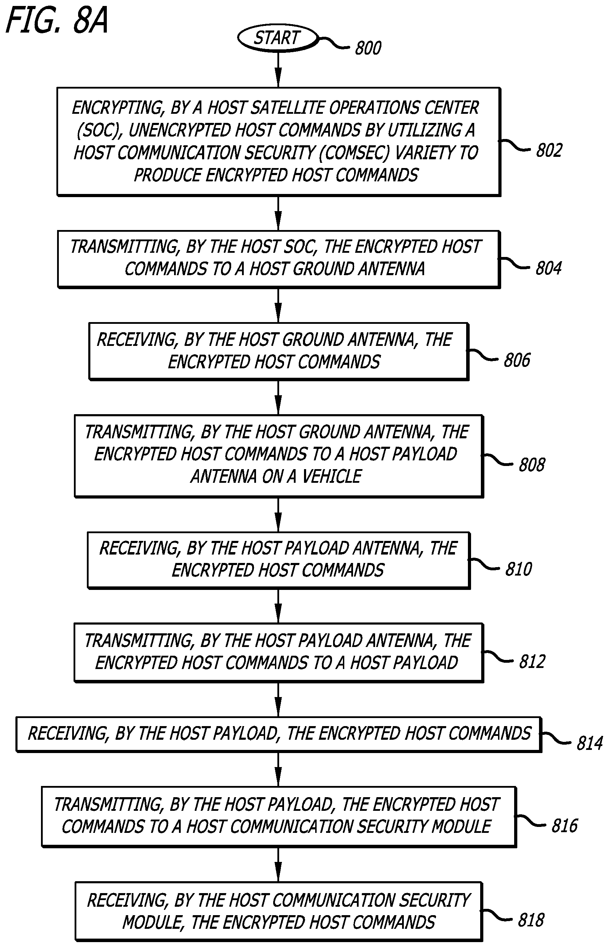

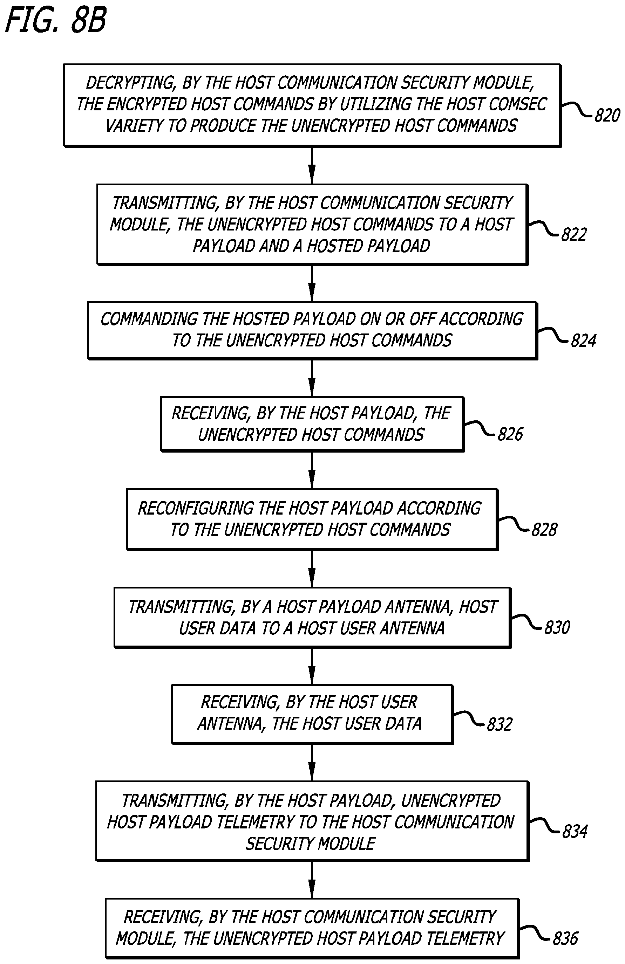

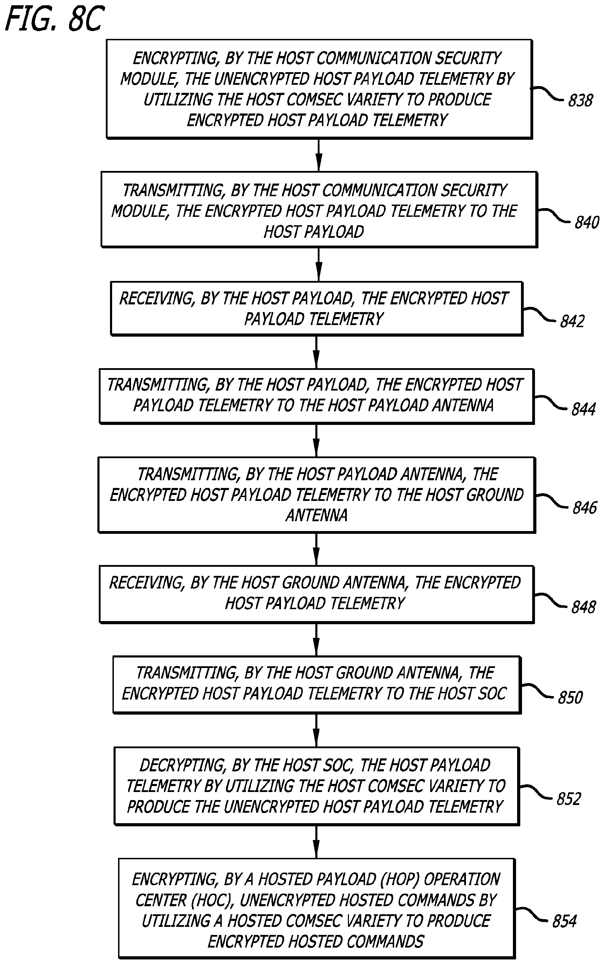

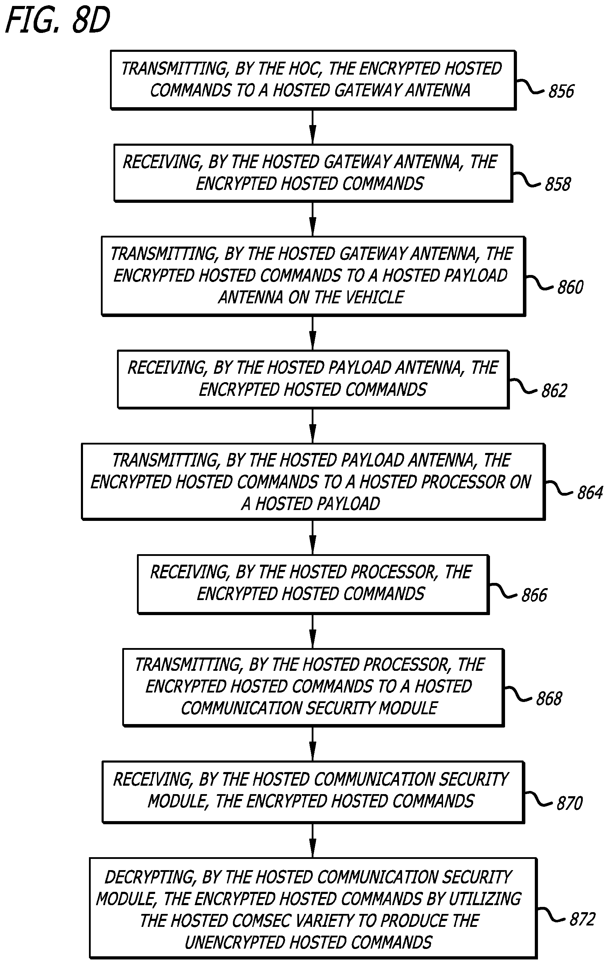

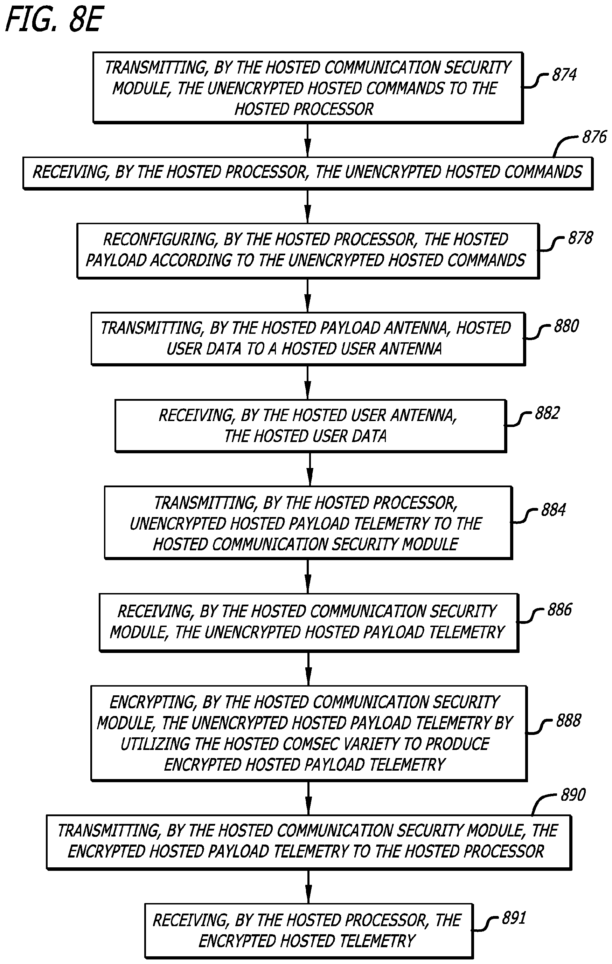

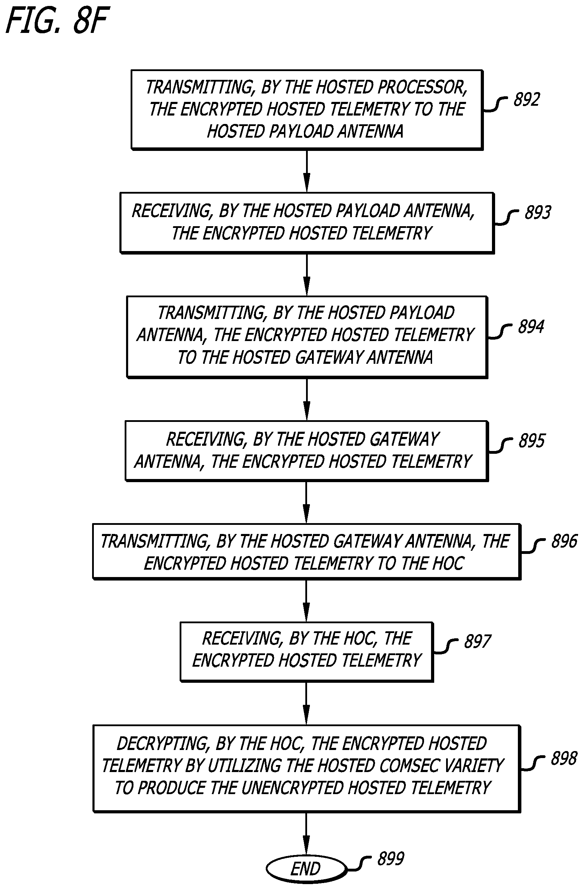

FIGS. 8A, 8B, 8C, 8D, 8E, and 8F together show a flow chart for the disclosed method for secured independent hosted payload operations, where the host commanding and host telemetry are both transmitted inband, in accordance with at least one embodiment of the present disclosure. At the start 800 of the method, a host satellite operations center (SOC) encrypts unencrypted host commands by utilizing a host communication security (COMSEC) variety to produce encrypted host commands 802. Then, the host SOC transmits the encrypted host commands to a host ground antenna 804. The host ground antenna then receives the encrypted host commands 806. Then, the host ground antenna transmits the encrypted host commands to a host payload antenna on a vehicle 808. The host payload antenna then receives the encrypted host commands 810. Then, the host payload antenna transmits the encrypted host commands to a host payload 812. The host payload then receives the encrypted host commands 814. Then, the host payload transmits the encrypted host commands to a host communication security module 816.

The host communication security module then receives the encrypted host commands 818. Then, the host communication security module decrypts the encrypted host commands by utilizing the host COMSEC variety to produce the unencrypted host commands 820. The host communication security module then transmits the unencrypted host commands to a host payload and a hosted payload 822. Then, the hosted payload is commanded on or off according to the unencrypted host commands 824. The host payload then receives the unencrypted host commands 826. Then, the host payload is reconfigured according to the unencrypted host commands 828. A host payload antenna then transmits host user data to a host user antenna 830. Then, the host user antenna receives the host user data 832. The host payload then transmits unencrypted host payload telemetry to the host communication security module 834.

Then, the host communication security module receives the unencrypted host payload telemetry 836. The host communication security module then encrypts the unencrypted host payload telemetry by utilizing the host COMSEC variety to produce encrypted host payload telemetry 838. The host communication security module then transmits the encrypted host payload telemetry to the host payload 840. Then, the host payload receives the encrypted host payload telemetry 842. The host payload then transmits the encrypted host payload telemetry to the host payload antenna 844. Then, the host payload antenna transmits the encrypted host payload telemetry to the host ground antenna 846. The host ground antenna then receives the encrypted host payload telemetry 848. Then, the host ground antenna transmits the encrypted host payload telemetry to the host SOC 850. The host SOC then decrypts the host payload telemetry by utilizing the host COMSEC variety to produce the unencrypted host payload telemetry 852.

A hosted payload (HoP) operation center (HOC) encrypts unencrypted hosted commands by utilizing a hosted COMSEC variety to produce encrypted hosted commands 854. Then, the HOC transmits the encrypted hosted commands to a hosted gateway antenna 856. The hosted gateway antenna then receives the encrypted hosted commands 858. Then, the hosted gateway antenna transmits the encrypted hosted commands to a hosted payload antenna on the vehicle 860. The hosted payload antenna then receives the encrypted hosted commands 862. Then, the hosted payload antenna transmits the encrypted hosted commands to a hosted processor on a hosted payload 864. The hosted processor then receives the encrypted hosted commands 866. Then, the hosted processor transmits the encrypted hosted commands to a hosted communication security module 868.

The hosted communication security module then receives the encrypted hosted commands 870. Then, the hosted communication security module decrypts the encrypted hosted commands by utilizing the hosted COMSEC variety to produce the unencrypted hosted commands 872. The hosted communication security module then transmits the unencrypted hosted commands to the hosted processor 874. Then, the hosted processor receives the unencrypted hosted commands 876. The hosted processor is then reconfigured the hosted payload according to the unencrypted hosted commands 878. Then, the hosted payload antenna transmits hosted user data to a hosted user antenna 880. The hosted user antenna then receives the hosted user data 882. Then, the hosted processor transmits unencrypted hosted payload telemetry to the hosted communication security module 884.

The hosted communication security module then receives the unencrypted hosted payload telemetry 886. Then, the hosted communication security module encrypts the unencrypted hosted payload telemetry by utilizing the hosted COMSEC variety to produce encrypted hosted payload telemetry 888. The hosted communication security module then transmits the encrypted hosted payload telemetry to the hosted processor 890. Then, the hosted processor receives the encrypted hosted telemetry 891. The hosted processor then transmits the encrypted hosted telemetry to the hosted payload antenna 892. Then, the hosted payload antenna receives the encrypted hosted telemetry 893. The hosted payload antenna then transmits the encrypted hosted telemetry to the hosted gateway antenna 894. Then, the hosted gateway antenna receives the encrypted hosted telemetry 895. The hosted gateway antenna then transmits the encrypted hosted telemetry to the HOC 896. Then, the HOC receives the encrypted hosted telemetry 897. The HOC then decrypts the encrypted hosted telemetry by utilizing the hosted COMSEC variety to produce the unencrypted hosted telemetry 898. Then, the method ends 899.

Although particular embodiments have been shown and described, it should be understood that the above discussion is not intended to limit the scope of these embodiments. While embodiments and variations of the many aspects of the invention have been disclosed and described herein, such disclosure is provided for purposes of explanation and illustration only. Thus, various changes and modifications may be made without departing from the scope of the claims.

Where methods described above indicate certain events occurring in certain order, those of ordinary skill in the art having the benefit of this disclosure would recognize that the ordering may be modified and that such modifications are in accordance with the variations of the present disclosure. Additionally, parts of methods may be performed concurrently in a parallel process when possible, as well as performed sequentially. In addition, more parts or less part of the methods may be performed.

Although certain illustrative embodiments and methods have been disclosed herein, it can be apparent from the foregoing disclosure to those skilled in the art that variations and modifications of such embodiments and methods can be made without departing from the scope of the invention as claimed. Accordingly, it is intended that the invention shall be limited only to the extent required by the appended claims and the rules and principles of applicable law.

## Claims

1. A system for payload operations, the system comprising:
a host satellite operations center, SOC, (150, 350, 550, 750) to transmit encrypted host commands, wherein the encrypted host commands are encrypted utilizing a host communication security, COMSEC, variety;
one of 1) a host payload antenna (107, 307, 507, 707) or 2) a command receiver (135, 355), on a vehicle (110, 310, 510, 710) to receive the encrypted host commands;
a host communication security module (162, 362, 562, 762) to decrypt the encrypted host commands by utilizing the host COMSEC variety to produce unencrypted host commands wherein the host communication security module (162, 362, 562, 762) comprises more than one communication security module and at least one of the communication security modules is a redundant security module;
a hosted payload (105, 305, 505, 705) configured to be commanded at least one of on or off according to the unencrypted host commands;
a host payload (106, 306, 506, 706) reconfigured according to the unencrypted host commands;
the host payload antenna (107, 307, 507, 707) to transmit host user data to a host user antenna (185, 385, 585, 785);
the host communication security module (162, 362, 562, 762) to encrypt unencrypted host payload telemetry by utilizing the host COMSEC variety to produce encrypted host payload telemetry;
one of 1) a telemetry transmitter (194, 594) or 2) the host payload antenna (107, 307, 507, 707) being configured to transmit the encrypted host payload telemetry;
the host SOC (150, 350, 550, 750) to decrypt the host payload telemetry by utilizing the host COMSEC variety to produce the unencrypted host payload telemetry;
a hosted payload, HoP, operation center, HOC, (160, 360, 560, 760) to encrypt unencrypted hosted commands, by utilizing a hosted COMSEC variety to produce encrypted hosted commands;
the HOC (160, 360, 560, 760) to transmit the encrypted hosted commands,
a hosted payload antenna (180, 380, 580, 780) on the vehicle (110, 310, 510, 710) to receive the encrypted hosted commands;
a hosted communication security module (165, 365, 565, 765) on the hosted payload (106, 306, 506, 706) to decrypt the encrypted hosted commands by utilizing the hosted COMSEC variety to produce unencrypted hosted commands;
a hosted processor (183, 383, 583, 783) on the hosted payload (106, 306, 506, 706) to reconfigure the hosted payload (106, 306, 506, 706) according to the unencrypted hosted commands;
the hosted payload antenna (180, 380, 580, 780) to transmit hosted user data to a hosted user antenna (190, 390, 590, 790);
the hosted communication security module (165, 365, 565, 765) to encrypt unencrypted hosted payload telemetry by utilizing the hosted COMSEC variety to produce encrypted hosted payload telemetry;
the hosted payload antenna (180, 380, 580, 780) to transmit the encrypted hosted telemetry; and
the HOC (160, 360, 560, 760) to decrypt the encrypted hosted telemetry by utilizing the hosted COMSEC variety to produce the unencrypted hosted telemetry.

2. The system of claim 1, wherein the hosted processor (183, 383, 583, 783) comprises the hosted communication security module (165, 365, 565, 765) as a single unit.

3. The system of claim 1, wherein the hosted communication security module (165, 365, 565, 765) and the hosted processor (183, 383, 583, 783) are two separate units.

4. The system of any of claims 1-3, wherein the hosted processor (183, 383, 583, 783) comprises at least one processor.

5. The system of any of claims 1-4, wherein the host payload (106, 306, 506, 706) comprises at least one processor.

6. The system of any of claims 1-5, wherein the hosted communication security module (165, 365, 565, 765) comprises more than one communication security module.

7. The system of any of claims 1-6, wherein the host payload antenna (107, 307, 507, 707) and the hosted payload antenna (180, 380, 580, 780) each comprise at least one radio frequency, RF, antenna.

8. The system of claim 7, wherein the RF antenna is at least one of a reflector antenna or a multi-feed array antenna.

9. The system of any of claims 1-8, wherein at least one of the host payload (106, 306, 506, 706) or the hosted payload (106, 306, 506, 706) is reconfigured by adjusting at least one of: transponder power, transponder spectrum monitoring, transponder connectivity, transponder gain settings, transponder limiter settings, transponder automatic level control settings, transponder phase settings, internal gain generation, bandwidth for at least one beam, at least one frequency band for at least one of the at least one beam, transponder beamforming settings, effective isotropic radiation power, EIRP, for at least one of the at least one beam, transponder channels, or beam steering.

10. The system of any of claims 1-9, wherein the host payload (106, 306, 506, 706) is reconfigured by reconfiguring at least one of: the host payload antenna (107, 307, 507, 707), at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix.

11. The system of any of claims 1-10, wherein the hosted payload (106, 306, 506, 706) is reconfigured by reconfiguring at least one of: the hosted payload antenna (180, 380, 580, 780), at least one analog-to-digital converter, at least one digital-to-analog converter, at least one beamformer, at least one digital channelizer, at least one demodulator, at least one modulator, at least one digital switch matrix, at least one digital combiner, or at least one analog switch matrix.

12. The system of any of claims 1-11, wherein the vehicle (110, 310, 510, 710) is an airborne vehicle.

13. The system of claim 12, wherein the airborne vehicle is one of a satellite, an aircraft, an unmanned aerial vehicle, UAV, or a space plane.

14. A method for payload operations, the method comprising:
transmitting, using a host satellite operations center, SOC, (150, 350, 550, 750) encrypted host commands, wherein the encrypted host commands are encrypted utilizing a host communication security, COMSEC variety;
receiving, using one of 1) a host payload antenna (107, 307, 507, 707) or 2) a command receiver (135, 355) on a vehicle (110, 310, 510, 710), the encrypted host commands;
decrypting, using a host communication security module (162, 362, 562, 762), the encrypted host commands by utilizing the host COMSEC variety to produce unencrypted host commands wherein the host communication security module (162, 362, 562, 762) comprises more than one communication security module and at least one of the communication security modules is a redundant security module;
commanding a hosted payload (105, 305, 505, 705) to be at least one of on or off according to the unencrypted host commands;
reconfiguring a host payload (106, 306, 506, 706) according to the unencrypted host commands;
transmitting, using the host payload antenna (107, 307, 507, 707), host user data to a host user antenna (185, 385, 585, 785);
encrypting, using the host communication security module (162, 362, 562, 762), unencrypted host payload telemetry by utilizing the host COMSEC variety to produce encrypted host payload telemetry;
transmitting, using one of 1) a telemetry transmitter (194, 594) or 2) a host payload antenna (107, 307, 507, 707), the encrypted host payload telemetry;
decrypting, using the host SOC (150, 350, 550, 750), the host payload telemetry by utilizing the host COMSEC variety to produce the unencrypted host payload telemetry;
encrypting, using a hosted payload, HoP operation center, HOC, (160, 360, 560, 760) unencrypted hosted commands by utilizing a hosted COMSEC variety to produce encrypted hosted commands;
transmitting, using the HOC (160, 360, 560, 760), the encrypted hosted commands;
receiving, at a hosted payload antenna (180, 380, 580, 780) on the vehicle (110, 310, 510, 710), the encrypted hosted commands;
decrypting, using a hosted communication security module (165, 365, 565, 765) on the hosted payload, the encrypted hosted commands by utilizing the hosted COMSEC variety to produce unencrypted hosted commands;
reconfiguring, using a hosted processor (183, 383, 583, 783) on the hosted payload (105, 305, 505, 705), the hosted payload (105, 305, 505, 705) according to the unencrypted hosted commands;
transmitting, using the hosted payload antenna (180, 380, 580, 780), hosted user data to a hosted user antenna (190, 390, 590, 790);
encrypting, using the hosted communication security module (165, 365, 565, 765), unencrypted hosted payload telemetry by utilizing the hosted COMSEC variety to produce encrypted hosted payload telemetry;
transmitting, using the hosted payload antenna (180, 380, 580, 780), the encrypted hosted telemetry; and
decrypting, using the HOC (160, 360, 560, 760), the encrypted hosted telemetry by utilizing the hosted COMSEC variety to produce the unencrypted hosted telemetry.

## Patentansprüche

1. System für Payload-Operationen, wobei das System aufweist:
eine Host-Satellitenbetriebszentrale, SOC, (150, 350, 550, 750) zum Übertragen verschlüsselter Host-Befehle, wobei die verschlüsselten Host-Befehle unter Verwendung einer Host-Kommunikationssicherheits-, COMSEC, Variante verschlüsselt sind;
1) eine Host-Payload-Antenne (107, 307, 507, 707) oder 2) einen Befehlsempfänger (135, 355) auf einem Fahrzeug (110, 310, 510, 710) zum Empfangen der verschlüsselten Host-Befehle;
ein Host-Kommunikationssicherheitsmodul (162, 362, 562, 762) zum Entschlüsseln der verschlüsselten Host-Befehle unter Verwendung der Host-COMSEC-Variante zum Erzeugen unverschlüsselter Host-Befehle, wobei das Host-Kommunikationssicherheitsmodul (162, 362, 562, 762) mehr als ein Kommunikationssicherheitsmodul aufweist und mindestens eines der Kommunikationssicherheitsmodule ein redundantes Sicherheitsmodul ist;
eine gehostete Payload (105, 305, 505, 705), die so konfiguriert ist, dass sie gemäß den unverschlüsselten Host-Befehlen mindestens entweder ein- oder ausgeschaltet werden kann;
eine Host-Payload (1606, 306, 506, 706), die gemäß den unverschlüsselten Host-Befehlen neu konfiguriert wird;
die Host-Payload-Antenne (107, 307, 507, 707) zum Übertragen von Host-Benutzerdaten an eine Host-Benutzerantenne (185, 385, 585, 785);
das Host-Kommunikationssicherheitsmodul (162, 362, 562, 762) zum Verschlüsseln unverschlüsselter Host-Payload-Telemetrie unter Verwendung der Host-COMSEC-Variante zum Erzeugen verschlüsselter Host-Payload-Telemetrie,
wobei 1) ein Telemetriesender (194, 594) oder 2) die Host-Payload-Antenne (107, 307, 507, 707) dafür konfiguriert ist, die verschlüsselte Host-Payload-Telemetrie zu übertragen;
das Host-SOC (150, 350, 550, 750) zum Verschlüsseln der Host-Payload-Telemetrie durch Verwenden der Host-COMSEC-Variante zum Erzeugen der unverschlüsselten Host-Payload-Telemetrie;
eine gehostete Payload-, HoP-, Betriebszentrale, HOC, (160, 360, 560, 760) zum Verschlüsseln unverschlüsselter gehosteter Befehle unter Verwendung einer gehosteten COMSEC-Variante zum Erzeugen verschlüsselter gehosteter Befehle;
das HOC (160, 360, 560, 760) zum Übertragen der verschlüsselten gehosteten Befehle;
eine gehostete Payload-Antenne (180, 380, 580, 780) auf dem Fahrzeug (110, 310, 510, 710) zum Empfangen der verschlüsselten gehosteten Befehle;
ein gehostetes Kommunikationssicherheitsmodul (165, 365, 565, 765) auf der gehosteten Payload (106, 306, 506, 706) zum Entschlüsseln der verschlüsselten gehosteten Befehle unter Verwendung der gehosteten COMSEC-Variante zum Erzeugen unverschlüsselter gehosteter Befehle;
einen gehosteten Prozessor (183, 383, 583, 783) auf der gehosteten Payload (106, 306, 506, 706) zum Neukonfigurieren der gehosteten Payload (106, 306, 506, 706) gemäß den unverschlüsselten gehosteten Befehlen;
die gehostete Payload-Antenne (180, 380, 580, 780) zum Übertragen gehosteter Benutzerdaten an eine gehostete Benutzerantenne (190, 390, 590, 790);
das gehostete Kommunikationssicherheitsmodul (165, 365, 565, 765) zum Verschlüsseln unverschlüsselter gehosteter Payload-Telemetrie unter Verwendung der gehosteten COMSEC-Variante zum Erzeugen verschlüsselter gehosteter Payload-Telemetrie;
die gehostete Payload-Antenne (180, 380, 580, 780) zum Übertragen der verschlüsselten gehosteten Telemetrie; und
die HOC (160, 360, 560, 760) zum Entschlüsseln der verschlüsselten gehosteten Telemetrie unter Verwendung der gehosteten COMSEC-Variante zum Erzeugen der unverschlüsselten gehosteten Telemetrie.

2. System nach Anspruch 1, wobei der gehostete Prozessor (183, 383, 583, 783) das gehostete Kommunikationssicherheitsmodul (165, 365, 565, 765) als eine einzelne Einheit aufweist.

3. System nach Anspruch 1, wobei das gehostete Kommunikationssicherheitsmodul (165, 365, 565, 765) und der gehostete Prozessor (183, 383, 583, 783) zwei separate Einheiten sind.

4. System nach einem der Ansprüche 1 bis 3, wobei der gehostete Prozessor (183, 383, 583, 783) mindestens einen Prozessor aufweist.

5. System nach einem der Ansprüche 1 bis 4, wobei die Host-Payload (106, 306, 506, 706) mindestens einen Prozessor aufweist.

6. System nach einem der Ansprüche 1 bis 5, wobei das gehostete Kommunikationssicherheitsmodul (165, 365, 565, 765) mehr als ein Kommunikationssicherheitsmodul aufweist.

7. System nach einem der Ansprüche 1 bis 6, wobei die Host-Payload-Antenne (107, 307, 507, 707) und die gehostete Payload-Antenne (180, 380, 580, 780) jeweils mindestens eine Hochfrequenz(HF)antenne aufweisen.

8. System nach Anspruch 7, wobei die HF-Antenne eine Reflektorantenne und/oder eine Multifeed-Array-Antenne ist.

9. System nach einem der Ansprüche 1 bis 8, wobei die Host-Payload (106, 306, 506, 706) und/oder die gehostete Payload (106, 306, 506, 706) neu konfiguriert ist oder sind durch Einstellen mindestens eines der folgenden Elemente: Transponderleistung, Transponderspektrumüberwachung, Transponderkonnektivität, Transponderverstärkungseinstellungen, Transponderbegrenzereinstellungen, automatische Transponderpegelsteuerungseinstellungen, Transponderphaseneinstellungen, interne Verstärkungserzeugung, Bandbreite für mindestens einen Strahl, mindestens ein Frequenzband für mindestens einen unter dem mindestens einen Strahl, Transponderstrahlformungseinstellungen, effektive isotrope Strahlungsleistung, EIRP, für mindestens einen unter dem mindestens einen Strahl, Transponderkanäle oder Strahllenkung.

10. System nach einem der Ansprüche 1 bis 9, wobei die Host-Payload (106, 306, 506, 706) neu konfiguriert ist durch Neukonfigurieren mindestens eines der folgenden Elemente: die Host-Payload-Antenne (107, 307, 507, 707), mindestens einen Analog-Digital-Wandler, mindestens einen Digital-Analog-Wandler, mindestens einen Strahlformer, mindestens einen digitalen Channelizer, mindestens einen Demodulator, mindestens einen Modulator, mindestens eine digitale Schaltmatrix, mindestens einen digitalen Kombinierer oder mindestens eine analoge Schaltmatrix.

11. System nach einem der Ansprüche 1 bis 10, wobei die gehostete Payload (106, 306, 506, 706) neu konfiguriert ist durch Neukonfigurieren mindestens eines der folgenden Elemente: die gehostete Payload-Antenne (180, 380, 580, 780), mindestens einen Analog-Digital-Wandler, mindestens einen Digital-Analog-Wandler, mindestens einen Strahlformer, mindestens einen digitalen Channelizer, mindestens einen Demodulator, mindestens einen Modulator, mindestens eine digitale Schaltmatrix, mindestens einen digitalen Kombinierer oder mindestens eine analoge Schaltmatrix.

12. System nach einem der Ansprüche 1 bis 11, wobei das Fahrzeug (110, 310, 510, 710) ein Luftfahrzeug ist.

13. System nach Anspruch 12, wobei das Luftfahrzeug ein Satellit, ein Flugzeug, ein unbemanntes Luftfahrzeug, UAV, oder ein Raumflugzeug ist.

14. Verfahren für Payload-Operationen, wobei das Verfahren die Schritte aufweist:
Übertragen verschlüsselter Host-Befehle unter Verwendung einer Host-Satellitenbetriebszentrale, SOC, (150, 350, 550, 750), wobei die verschlüsselten Host-Befehle unter Verwendung einer Host-Kommunikationssicherheits-, COMSEC, Variante verschlüsselt sind;
Empfangen der verschlüsselten Host-Befehle unter Verwendung entweder 1) einer Host-Payload-Antenne (107, 307, 507, 707) oder 2) eines Befehlsempfängers (135, 355) auf einem Fahrzeug (110, 310, 510, 710);
Entschlüsseln der verschlüsselten Host-Befehle unter Verwendung eines Host-Kommunikationssicherheitsmoduls (162, 362, 562, 762) unter Nutzung der Host-COMSEC-Variante zum Erzeugen unverschlüsselter Host-Befehle, wobei das Host-Kommunikationssicherheitsmodul (162, 362, 562, 762) mehr als ein Kommunikationssicherheitsmodul aufweist und mindestens eines der Kommunikationssicherheitsmodule ein redundantes Sicherheitsmodul ist;
Anweisen, dass eine gehostete Payload (105, 305, 505, 705) gemäß den unverschlüsselten Host-Befehlen mindestens entweder ein- oder ausgeschaltet werden soll;
Neukonfigurieren einer Host-Payload (106, 306, 506, 706) gemäß den unverschlüsselten Host-Befehlen;
Übertragen von Host-Benutzerdaten an eine Host-Benutzerantenne (185, 385, 585, 785) unter Verwendung der Host-Payload-Antenne (107, 307, 507, 707);
Verschlüsseln von unverschlüsselter Host-Payload-Telemetrie unter Verwendung des Host-Kommunikationssicherheitsmoduls (162, 362, 562, 762) unter Nutzung der Host-COMSEC-Variante zum Erzeugen verschlüsselter Host-Payload-Telemetrie;
Übertragen der verschlüsselten Host-Payload-Telemetrie unter Verwendung 1) eines Telemetrie-Senders (194, 594) oder 2) einer Host-Payload-Antenne (107, 307, 507, 707);
Entschlüsseln der Host-Payload-Telemetrie unter Verwendung des Host-SOC (150, 350, 550, 750) unter Nutzung der Host-COMSEC-Variante zum Erzeugen der unverschlüsselten Host-Payload-Telemetrie;
Verschlüsseln unverschlüsselter gehosteter Befehle unter Verwendung einer gehosteten Payload-, HoP-, Betriebszentrale, HOC, (160, 360, 560, 760) unter Nutzung einer gehosteten COMSEC-Variante zum Erzeugen verschlüsselter gehosteter Befehle;
Übertragen der verschlüsselten gehosteten Befehle unter Verwendung der HOC (160, 360, 560, 760);
Empfangen der verschlüsselten gehosteten Befehle an einer gehosteten Payload-Antenne (180, 380, 580, 780) auf dem Fahrzeug (110, 310, 510, 710);
Entschlüsseln der verschlüsselten gehosteten Befehle unter Verwendung eines gehosteten Kommunikationssicherheitsmoduls (165, 365, 565, 765) auf der gehosteten Payload unter Nutzung der gehosteten COMSEC-Variante zum Erzeugen unverschlüsselter gehosteter Befehle;
Neukonfigurieren der gehosteten Payload (105, 305, 505, 705) gemäß den unverschlüsselten gehosteten Befehlen unter Verwendung eines gehosteten Prozessors (183, 383, 583, 783) auf der gehosteten Payload (105, 305, 505, 705);
Übertragen von gehosteten Benutzerdaten an eine gehostete Benutzerantenne (190, 390, 590, 790) unter Verwendung der gehosteten Payload-Antenne (180, 380, 580, 780);
Verschlüsseln unverschlüsselter gehosteter Payload-Telemetrie unter Verwendung des gehosteten Kommunikationssicherheitsmoduls (165, 365, 565, 765) unter Nutzung der gehosteten COMSEC-Variante zum Erzeugen verschlüsselter gehosteter Payload-Telemetrie;
Übertragen der verschlüsselten gehosteten Telemetrie unter Verwendung der gehosteten Payload-Antenne (180, 380, 580, 780); und
Entschlüsseln der verschlüsselten gehosteten Telemetrie unter Verwendung der HOC (160, 360, 560, 760) unter Nutzung der gehosteten COMSEC-Variante zum Erzeugen der unverschlüsselten gehosteten Telemetrie.

## Revendications

1. Système pour des opérations de charge utile, le système comprenant :
un centre d'opérations satellitaires, SOC, hôte (150, 350, 550, 750) pour transmettre des commandes hôte chiffrées, dans lequel les commandes hôte chiffrées sont chiffrées en utilisant une diversité de sécurité de communication hôte, COMSEC ;
l'un parmi 1) une antenne de charge utile hôte (107, 307, 507, 707) et 2) un récepteur de commande (135, 355), sur un véhicule (110, 310, 510, 710) pour recevoir les commandes hôte chiffrées ;
un module de sécurité de communication hôte (162, 362, 562, 762) pour déchiffrer les commandes hôte chiffrées par l'utilisation de la diversité COMSEC hôte pour produire des commandes hôte non chiffrées, dans lequel le module de sécurité de communication hôte (162, 362, 562, 762) comprend plusieurs modules de sécurité de communication et au moins l'un des modules de sécurité de communication est un module de sécurité redondant ;
une charge utile hébergée (105, 305, 505, 705) configurée pour être commandée pour être au moins l'une parmi activée et désactivée en fonction des commandes hôte non chiffrées ;
une charge utile hôte (106, 306, 506, 706) reconfigurée en fonction des commandes hôte non chiffrées ;
l'antenne de charge utile hôte (107, 307, 507, 707) pour transmettre des données d'utilisateur hôte à une antenne d'utilisateur hôte (185, 385, 585, 785) ;
le module de sécurité de communication hôte (162, 362, 562, 762) pour chiffrer une télémétrie de charge utile hôte non chiffrée par l'utilisation de la diversité COMSEC hôte pour produire une télémétrie de charge utile hôte chiffrée ;
l'un parmi 1) un émetteur de télémétrie (194, 594) et 2) l'antenne de charge utile hôte (107, 307, 507, 707) étant configuré pour transmettre la télémétrie de charge utile hôte chiffrée ;
le SOC hôte (150, 350, 550, 750) pour déchiffrer la télémétrie de charge utile hôte par l'utilisation de la diversité COMSEC hôte pour produire la télémétrie de charge utile hôte non chiffrée ;
un centre d'opérations de charge utile hébergée, HoP, HOC, (160, 360, 560, 760) pour chiffrer des commandes hébergées non chiffrées, par l'utilisation d'une diversité COMSEC hébergée pour produire des commandes hébergées chiffrées ;
le HOC (160, 360, 560, 760) pour transmettre les commandes hébergées chiffrées ;
une antenne de charge utile hébergée (180, 380, 580, 780) sur le véhicule (110, 310, 510, 710) pour recevoir les commandes hébergées chiffrées ;
un module de sécurité de communication hébergé (165, 365, 565, 765) sur la charge utile hébergée (106, 306, 506, 706) pour déchiffrer les commandes hébergées chiffrées par l'utilisation de la diversité COMSEC hébergée pour produire des commandes hébergées non chiffrées ;
un processeur hébergé (183, 383, 583, 783) sur la charge utile hébergée (106, 306, 506, 706) pour reconfigurer la charge utile hébergée (106, 306, 506, 706) en fonction des commandes hébergées non chiffrées ;
l'antenne de charge utile hébergée (180, 380, 580, 780) pour transmettre des données d'utilisateur hébergées à une antenne d'utilisateur hébergée (190, 390, 590, 790) ;
le module de sécurité de communication hébergé (165, 365, 565, 765) pour chiffrer une télémétrie de charge utile hébergée non chiffrée par l'utilisation de la diversité COMSEC hébergée pour produire une télémétrie de charge utile hébergée chiffrée ;
l'antenne de charge utile hébergée (180, 380, 580, 780) pour transmettre la télémétrie hébergée chiffrée ; et
le HOC (160, 360, 560, 760) pour déchiffrer la télémétrie hébergée chiffrée par l'utilisation de la diversité COMSEC hébergée pour produire la télémétrie hébergée non chiffrée.

2. Système selon la revendication 1, dans lequel le processeur hébergé (183, 383, 583, 783) comprend le module de sécurité de communication hébergé (165, 365, 565, 765) en tant qu'une unité unique.

3. Système selon la revendication 1, dans lequel le module de sécurité de communication hébergé (165, 365, 565, 765) et le processeur hébergé (183, 383, 583, 783) sont deux unités distinctes.

4. Système selon l'une quelconque des revendications 1 à 3, dans lequel le processeur hébergé (183, 383, 583, 783) comprend au moins un processeur.

5. Système selon l'une quelconque des revendications 1 à 4, dans lequel la charge utile hôte (106, 306, 506, 706) comprend au moins un processeur.

6. Système selon l'une quelconque des revendications 1 à 5, dans lequel le module de sécurité de communication hébergé (165, 365, 565, 765) comprend plusieurs modules de sécurité de communication.

7. Système selon l'une quelconque des revendications 1 à 6, dans lequel l'antenne de charge utile hôte (107, 307, 507, 707) et l'antenne de charge utile hébergée (180, 380, 580, 780) comprennent chacune au moins une antenne de radiofréquence, RF.

8. Système selon la revendication 7, dans lequel l'antenne RF est au moins l'une parmi une antenne à réflecteur et une antenne réseau multi-alimentation.

9. Système selon l'une quelconque des revendications 1 à 8, dans lequel au moins l'une parmi la charge utile hôte (106, 306, 506, 706) et la charge utile hébergée (106, 306, 506, 706) est reconfigurée par l'ajustement d'au moins l'un parmi : une puissance de transpondeur, une surveillance de spectre de transpondeur, une connectivité de transpondeur, des réglages de gain de transpondeur, des réglages de limiteur de transpondeur, des réglages de régulation de niveau automatique de transpondeur, des réglages de phase de transpondeur, une génération de gain interne, une bande passante pour au moins un faisceau, au moins une bande de fréquences pour au moins l'un de l'au moins un faisceau, des réglages de formation de faisceau de transpondeur, une puissance de rayonnement isotrope efficace, EIRP, pour au moins l'un de l'au moins un faisceau, des canaux de transpondeur, et une orientation de faisceau.

10. Système selon l'une quelconque des revendications 1 à 9, dans lequel la charge utile hôte (106, 306, 506, 706) est reconfigurée par la reconfiguration d'au moins l'un parmi : l'antenne de charge utile hôte (107, 307, 507, 707), au moins un convertisseur analogique-numérique, au moins un convertisseur numériqueanalogique, au moins un dispositif de formation de faisceau, au moins un canaliseur numérique, au moins un démodulateur, au moins un modulateur, au moins une matrice de commutation numérique, au moins un combineur numérique, et au moins une matrice de commutation analogique.

11. Système selon l'une quelconque des revendications 1 à 10, dans lequel la charge utile hébergée (106, 306, 506, 706) est reconfigurée par la reconfiguration d'au moins l'un parmi : l'antenne de charge utile hébergée (180, 380, 580, 780), au moins un convertisseur analogique-numérique, au moins un convertisseur numériqueanalogique, au moins un dispositif de formation de faisceau, au moins un canaliseur numérique, au moins un démodulateur, au moins un modulateur, au moins une matrice de commutation numérique, au moins un combineur numérique, et au moins une matrice de commutation analogique.

12. Système selon l'une quelconque des revendications 1 à 11, dans lequel le véhicule (110, 310, 510, 710) est un véhicule aéroporté.

13. Système selon la revendication 12, dans lequel le véhicule aéroporté est l'un parmi un satellite, un aéronef, un véhicule aérien sans pilote, UAV, ou un avion spatial.

14. Procédé pour des opérations de charge utile, le procédé comprenant :
l'émission, en utilisant un centre d'opérations satellitaires, SOC, hôte (150, 350, 550, 750), de commandes hôte chiffrées, dans lequel les commandes hôte chiffrées sont chiffrées en utilisant une diversité de sécurité de communication hôte, COMSEC ;
la réception, en utilisant l'un parmi 1) une antenne de charge utile hôte (107, 307, 507, 707) et 2) un récepteur de commande (135, 355) sur un véhicule (110, 310, 510, 710), des commandes hôte chiffrées ;
le déchiffrement, en utilisant un module de sécurité de communication hôte (162, 362, 562, 762), des commandes hôte chiffrées par l'utilisation de la diversité COMSEC hôte pour produire des commandes hôte non chiffrées, dans lequel le module de sécurité de communication hôte (162, 362, 562, 762) comprend plusieurs modules de sécurité de communication et au moins l'un des modules de sécurité de communication est un module de sécurité redondant ;
la commande d'une charge utile hébergée (105, 305, 505, 705) pour être au moins l'une parmi activée et désactivée en fonction des commandes hôte non chiffrées ;
la reconfiguration d'une charge utile hôte (106, 306, 506, 706) en fonction des commandes hôte non chiffrées ;
l'émission, en utilisant l'antenne de charge utile hôte (107, 307, 507, 707), de données d'utilisateur hôte à une antenne d'utilisateur hôte (185, 385, 585, 785) ;
le chiffrement, en utilisant le module de sécurité de communication hôte (162, 362, 562, 762), d'une télémétrie de charge utile hôte non chiffrée par l'utilisation de la diversité COMSEC hôte pour produire une télémétrie de charge utile hôte chiffrée ;
l'émission, en utilisant l'un parmi 1) un émetteur de télémétrie (194, 594) et 2) une antenne de charge utile hôte (107, 307, 507, 707), de la télémétrie de charge utile hôte chiffrée ;
le déchiffrement, en utilisant le SOC hôte (150, 350, 550, 750), de la télémétrie de charge utile hôte par l'utilisation de la diversité COMSEC hôte pour produire la télémétrie de charge utile hôte non chiffrée ;
le chiffrement, en utilisant un centre d'opérations de charge utile hébergée, HoP, HOC, (160, 360, 560, 760), de commandes hébergées non chiffrées par l'utilisation d'une diversité COMSEC hébergée pour produire des commandes hébergées chiffrées ;
l'émission, en utilisant le HOC (160, 360, 560, 760), des commandes hébergées chiffrées ;
la réception, au niveau d'une antenne de charge utile hébergée (180, 380, 580, 780) sur le véhicule (110, 310, 510, 710), des commandes hébergées chiffrées ;
le déchiffrement, en utilisant un module de sécurité de communication hébergé (165, 365, 565, 765) sur la charge utile hébergée, des commandes hébergées chiffrées par l'utilisation de la diversité COMSEC hébergée pour produire des commandes hébergées non chiffrées ;
la reconfiguration, en utilisant un processeur hébergé (183, 383, 583, 783) sur la charge utile hébergée (105, 305, 505, 705), de la charge utile hébergée (105, 305, 505, 705) en fonction des commandes hébergées non chiffrées ;
l'émission, en utilisant l'antenne de charge utile hébergée (180, 380, 580, 780), de données d'utilisateur hébergées à une antenne d'utilisateur hébergée (190, 390, 590, 790) ;
le chiffrement, en utilisant le module de sécurité de communication hébergé (165, 365, 565, 765), d'une télémétrie de charge utile hébergée non chiffrée par l'utilisation de la diversité COMSEC hébergée pour produire une télémétrie de charge utile hébergée chiffrée ;
l'émission, en utilisant l'antenne de charge utile hébergée (180, 380, 580, 780), de la télémétrie hébergée chiffrée ; et
le déchiffrement, en utilisant le HOC (160, 360, 560, 760), de la télémétrie hébergée chiffrée par l'utilisation de la diversité COMSEC hébergée pour produire la télémétrie hébergée non chiffrée.
